# EUROPEAN PATENT APPLICATION

(11) **EP 2 218 339 A1**
(43) Date of publication of application: **18.08.2010**
(21) Application number: 10152207.6
(22) Date of filing: 29.01.2010
(51) Int. Cl.: A23L 1/19, A23L 1/24, A23L 1/39, A23B 4/00, A23C 19/09

(54) **Retortable dairy base**

(30) Priority: 29.01.2009 US 148285 P
(71) Applicant: Degner, Brian M., Omaha NE 68136 (US)
(72) Inventor: Degner, Brian M., Omaha NE 68136 (US)
(74) Representative: Hamer, Christopher K.

(57) **Abstract**

Dairy bases, methods of making the dairy bases, and food products comprising the dairy bases are disclosed. The dairy bases comprise a heat-stable dairy protein component, a stabilizer component, an oil component, and a liquid component. The dairy bases comprise a stable emulsion at ambient temperature for at least 14 days after thermal processing. The dairy bases or food products comprising the dairy bases can be thermally processed, such as by retort processing, to produce shelf stable food products that comply with government and/or industry standards for commercial sterility without adversely affecting the color, texture, mouth feel, flavor, thermoplasticity, viscosity, and/or appearance of the dairy bases or food products comprising the dairy bases.

## Description

This application claims priority to U.S. Provisional Application No. 61/148,285 filed January 29, 2009, the contents of which are hereby incorporated by reference in their entirety.

### BACKGROUND

There are five basic sauces conventionally used in foods, particularly in the food service industry or in prepared foods. These sauces are Espangole (brown stock based), Velouté, (light stock based), Bechamel (basic white sauce), Hollandaise sauce and mayonnaise (both emulsified sauces). Many of these sauces spoil easily if they are not stored under suitable temperature and humidity conditions that discourage microbial growth. For example, Veloute sauces which are white sauces made with a chicken, veal stock or fish fumet may sometimes be enriched with egg yolks or cream and can serve as a base for other sauces. Dairy-based sauces enriched with cream or other dairy ingredient are particularly susceptible to spoilage. Similarly, "blond" roux and Bechamel sauce, which are basic French white sauces, are typically made by stirring milk into a butter-flour roux. Bechamel sauce has a limited shelf life and generally requires 30 minutes after everything has been set in place for preparation. Furthermore, this type of sauce must be held on a steam table during service at temperatures between about 165°F and about 180°F in order to control microbial growth.

In addition, such dairy-based sauces are used frequently to prepare a variety of finished sauces like Alfredo and gourmet dishes. However, preparation of these sauces requires much skill and technical aptitude that many food preparers lack.
This is because dairy-based sauces often require numerous ingredients, careful mixing for extended periods and even more judicious handling in order to prevent syneresis or destabilization of the final sauce. Therefore, finding a dairy base that can be readily modified by simple addition of one or more optional ingredients would be helpful in reducing the time, cost and complexities involved in preparing from scratch dairy sauces.

Microbiological stability is particularly pertinent in the food service industry where large amounts of sauces and other ingredients susceptible to microbial spoilage are used. Hence, sauces and ingredients that undergo little, if any spoilage are considered beneficial during food preparation. For example, one suitable ingredient for the food service industry, as well as in food manufacturing and for domestic use, is a shelf-stable dairy product that can be opened and used over extended time without spoilage. Such a product, particularly one which is bland in flavor and has no or minimal sour flavor notes should be desired by the food service industry and the domestic cook.

Powdered sauce mixes that are reconstituted at the time of use have been developed. However, once the powdered mixes are reconstituted, the reconstituted sauce is subject to spoilage. Also, these reconstituted sauces have ingredients that differ from that of freshly prepared sauces. For example, one commercial Hollandaise Sauce Mix available from DELICO Corporation, Pointe Claire, Quebec, Canada contains the following ingredients: skim milk powder, wheat flour, modified corn starch, monosodium glutamate, egg yolk powder, dehydrated onions, hydrolyzed plant protein, salt, vegetable oil, citric acid, locust bean gum, guar gum, disodium inosinate, disodium guanylate and spices. Freshly prepared hollandaise sauces are generally prepared from egg yolks, butter, lemon juice and spices.

Furthermore, powdered sauce mixes also do not save the preparation time needed for making fresh sauces. For example, reconstitution of the hollandaise sauce from DELICO Corporation requires melting salted margarine or butter, blending in powdered sauce mix, stirring well, adding cold water, bringing the contents to a boil and then simmering for 1 minute while stirring constantly with a whisk. Therefore, development of a powdered sauce mix that can be reconstituted in a rapid period of time would be desirable.

Pre-cooked, shelf-stable products must be retorted in sealed containers under time and temperature conditions sufficient to provide a commercially-sterile product. The sealed containers have historically been of the metal can type. More recently there have appeared plastic bowls and trays which are sealed with flexible sheet material. Therefore, commercially sterile dairy-based sauces are expected to look similar to chef-prepared sauces that have been made from scratch with respect to texture, color and appearance. As a result, shelf-stable dairy-based sauces are expected to be heat stable and maintain a consistent emulsion, particularly oil-in-water emulsions which are frequently used to prepare dairy-based sauces.

Nevertheless, retort processing of dairy-based sauces causes changes to the color of the sauce from white to tan or brown. The darkened color is the result of browning. Browning is a term commonly employed for describing the color and physical changes caused by the reaction of reducing sugars, typically lactose, galactose and glucose, with the alpha-amino group of lysine or any other primary amine present in a food product. In addition to the undesirable color change, this reaction can cause physical changes to the products as products of the browning reaction decompose and polymerize forming melanoidins and other undesirable end products that modify the flavor of the product.

Furthermore, retort processing typically destabilizes the oil-in-water emulsion to result in phase separation where the oil and/or water phase separates from the rest of the sauce. Retort processing may also result in undesirable protein coagulation which affects the texture and consistency of the retorted dairy sauce. Hence, developing a shelf-stable dairy-based sauce that delivers the desired taste experience of a freshly prepared chef-created sauce without deterioration in color, texture, and/or appearance would be desirable.

### SUMMARY

Dairy bases and food products comprising the dairy bases are disclosed. The dairy bases can be thermally processed, such as by retort processing, to produce shelf stable food products that comply with government and/or industry standards for commercial sterility. The dairy bases and/or dairy-based sauces can be thermally processed at time and temperature conditions necessary to achieve shelf stability and/or commercial sterility without adversely affecting the color, texture, mouth feel, flavor, thermoplasticity, viscosity, and/or appearance of the dairy bases or food products comprising the dairy bases.

The dairy bases comprise a heat-stable dairy protein component, a stabilizer component, an oil component, and a liquid component, such as water. In one aspect, the dairy bases include about 0.25% to about 15% by weight of a heat-stable dairy protein component; about 0.1% to about 5% by weight of a stabilizer component; about 5% to about 30% by weight of an oil component; about 50% to about 80% by weight liquid component. In another aspect, the dairy bases comprises an oil-in-water emulsion, the oil-in-water emulsion comprising a water phase and a stabilized oil phase, the water phase comprising a heat-stable dairy protein component, and the stabilized oil phase comprising a stabilizer component and an oil component;
wherein the heat-stable dairy protein component comprises about 0.25% to about 15% of the dairy base by weight, the stabilizer comprises about 0.1 % to about 5% of the dairy base by weight, and the oil component comprising about 5% to about 30% of the dairy base by weight. The dairy bases comprise a stable emulsion at ambient temperature for at least 14 days after thermal processing. In an example, the dairy bases comprise a stable emulsion at ambient temperature for at least 14 days after thermal processing such that a phase separation volume from the dairy base after thermal processing is less than 3% by volume of the dairy base. In some embodiments, the dairy base comprises a stable emulsion at ambient temperature for at least 18 months.

The heat-stable dairy protein component can include milk protein concentrate, milk protein isolate, whey protein concentrate, whey protein isolate, or a mixture thereof. The stabilizer component can include xanthan gum, locust bean gum, guar gum, konjac, iota carrageenan, kappa carrageenan, lambda carrageenan, carboxymethylcellulose, pectin, tamarind, gellan gum, agar, gelatin, alginate, or a mixture thereof. In an example, the stabilizer component is selected from the group consisting of locust bean gum, guar gum, xanthan gum, carrageenan gum, konjac, or any combination thereof.

The oil component can be any fat or oil that is suitable for human or animal consumption. The fat can be an animal fat or vegetable fat. The fat can be fully or partially hydrogenated or comprise saturated fats. Examples of suitable oils and fats include, but are not limited to vegetable oils such as soy bean oil, sunflower oil, canola oil, modified canola oil, palm kernel oil, coconut oil, dairy fats, dairy crèmes, butter and the like.

The dairy base can include one or more emulsifying salts. In an example, the dairy base comprises about 1% or less emulsifying salt. Examples of suitable emulsifying salts include, but are not limited to, monosodium phosphate, disodium phosphate, disodium pyrophosphate, trisodium pyrophosphate, tetrasodium pyrophosphate, pentasodium tripolyphosphate, monosodium citrate, disodium citrate, potassium citrate, or mixtures thereof.

In some embodiments, the viscosity of the dairy base or the food product containing the dairy base decreases to enhance and/or maximize heat transfer and reduce and/or minimize the thermal processing time and temperature to achieve commercial sterility of the dairy base or the food product containing the dairy base. The viscosity of the dairy base or the food product containing the dairy base at thermal processing temperatures, such as retort temperatures, can be selected by varying the stabilizer component, oil component, and/or heat stable dairy protein component; varying the combination of stabilizer components, oil components, and/or heat stable dairy protein component; and varying the concentration of stabilizer component(s), oil component(s), and/or heat stable dairy protein component(s). In an example, the viscosity of the dairy base or the food product containing the dairy base at thermal processing temperatures, such as retort temperatures, is about 50,000 centipoise or less.

Methods for making the dairy bases are also disclosed. The methods typically include mixing an amount of heat-stable dairy protein component with a volume of cold or hot water to disperse and wet the protein, heating (if necessary) to hydrate the protein, mixing an amount of stabilizer component with an amount of oil component until the stabilizer component is uniformly dispersed in the oil component, adding the oil/stabilizer component mixture with the heat-stable dairy protein component mixture and any optional ingredients, and homogenizing the mixture to form the dairy base.

### BRIEF DESCRIPTION OF THE DRAWINGS

Referring now to the drawings in which like reference numbers represent corresponding parts throughout:
Figure 1 is a block diagram illustrating a method for producing dairy base.
Figure 2 is a block diagram illustrating an alternate method for producing a dairy base.
Figure 3 is a block diagram illustrating a method for producing a shelf-stable dairy-based sauce incorporating a dairy base.
Figure 4A shows chef-prepared Alfredo sauce samples before and after retort processing.
Figure 4B shows chef-prepared Alfredo sauce samples before and after retort processing.
Figure 5A shows Alfredo dairy-based sauce (T3BMD) samples before and after retort processing.
Figure 5B shows Alfredo dairy-based sauce (T4BMD) samples before and after retort processing.
Figure 6 is a plot showing the storage modulus (G') and loss modulus (G") of a dairy base of the disclosure at pH 6.5, 5.3, 4.3, and 3.5 as a function of strain.
Figure 7 is a plot showing the viscosity (cP) of a dairy base of the disclosure at pH 6.5, 5.3, 4.3, and 3.5 as a function of shear rate.

### DETAILED DESCRIPTION

### I. Definitions

The term "dairy protein component" as used herein refers to a milk protein concentrate, milk protein isolate, whey protein concentrate, whey protein isolate, or mixtures thereof. The term dairy protein component also includes soy milk, rice milk, coconut milk, and nut milk concentrates and protein isolates therefrom. The dairy protein component can be used in fluid, concentrate, or dry product form. Preferably, the dairy protein component is heat stable.

"Milk protein concentrate" as used herein refers to a dairy product consisting of natural milk constituents that is 40% or more protein by weight and includes milk protein isolates. The milk protein concentrate can be produced from milk, such as whole milk, skim milk, 1% milk, or 2% milk, using physical separation techniques. The separation processes can determine the composition of the milk protein concentrate by controlling the removal of small molecular weight components (lactose, soluble minerals, peptides, nucleic acids, etc.) from the milk and retention of the casein and serum (whey) proteins. The milk protein concentrate can be used in fluid, concentrate, or dry product form. A milk protein isolate can be produced from milk or whey using physical separation techniques that remove sufficient non-protein constituents from the milk or whey so that the finished whey protein isolate dry product contains not less than 90% protein. In dry product form, the milk protein concentrate comprises a minimum protein content of about 42%, about 1% to about 20% fat, about 8.5% or less ash, and not more than about 46% lactose by weight.

The term "whey protein concentrate" as used herein includes whey protein isolates and means the concentrate produced from whey using physical separation techniques, such as precipitation, filtration, or dialysis, that remove sufficient non-protein constituents from whey so that the finished whey protein concentrate in dry product form contains at least 25 percent protein. Whey protein concentrate can be used in fluid, concentrate, or dry product form. A whey protein isolate is produced from whey using physical separation techniques that remove sufficient non-protein constituents from the whey so that the finished whey protein isolate dry product contains not less than 90 percent protein. In dry product form, the whey protein concentrate comprises a minimum protein content of 25%, 1% to 30% fat, 2% to 15% ash, and not more than 60% lactose. The fat includes the total lipid content of the whey protein concentrate including both milk fat, phospholipids and other lipid containing materials.

The term "heat stable", unless described otherwise, refers to a material that does not undergo phase separation or a break in emulsion after application of heat. In reference to a dairy protein component, heat stable means that the component does not undergo or is resistant to denaturation, coagulation, and/or precipitation of proteins at the high temperatures used to achieve commercial sterility of a food product.

As used herein, the term "thermal processing" or "thermally processed" refers to heat treatment of a food in order to destroy harmful bacteria, organisms, and/or spores to render the product suitable for consumer use and consumption. Retort processing is one example of thermal processing. Minimum thermal process means the application of heat to a food product, either before or after sealing in a hermetically sealed container, for a period of time and at a temperature scientifically determined to be adequate to ensure commercial sterility.

As used herein, the term "retort" refers to any closed vessel or other equipment used for the thermal processing of foods. Unless described otherwise, the terms "retorting" and "retorted" refer to application of high temperatures of about 212°F-300°F via a retort process to accomplish commercial sterilization.

As used herein, the terms "retortable" and "retort stable" are used interchangeably and refer to a product that does not undergo significant phase separation or a significant change in texture, consistency, flavor and/or appearance after retort processing to achieve commercial sterilization. A product can be both retort stable and shelf stable.

As used herein, the term "commercially sterile" or "commercial sterility" means that the food product complies with government and/or industry standards for commercial sterility of a food product. One example of such a regulation is 21 CFR § 113.3(e), which sets forth the United States Food and Drug Administration's regulations for commercial sterility of canned food products. Commercial sterility can be achieved by application of heat which renders the food free of microorganisms capable of reproducing in the food under normal nonrefrigerated conditions of storage and distribution, and viable microorganisms, including spores, of public health significance; or by the control of water activity and the application of heat, which renders the food free of microorganisms capable of reproducing in the food under normal nonrefrigerated conditions of storage and distribution. In an embodiment, a food product that is commercially sterile does not contain viable microorganisms in an amount capable of reproducing in the food and spoiling the food under normal non-refrigerated storage and distribution conditions. In an embodiment, a food product that is commercially sterile does not contain viable pathogenic microorganisms in an amount capable of proliferating in the food.

As used herein, the term "commercial sterilization" refers to the process by which a food product is thermally processed to render a food product commercially sterile. One example of a suitable thermal process is retort processing.

The term "microbial stability," as used herein, means that the product described does not support vegetative cell growth or spore germination to unacceptable levels.

As used herein, the term "stable emulsion" refers to a material or product that does not undergo substantial phase separation after a defined, extended time period or after application of heat, such as in thermal processing, or some other destabilizing force. The term "emulsion stability" means the material or product described does not undergo substantial phase separation after the defined, extended time period or after application of the heat or other destabilizing force.

As used herein, "shelf stable" refers to a product which can be distributed and merchandized at ambient temperature, such as about 21 °C/70°F, for a useful period of time. With respect to microbial stability, shelf stability means the product can be distributed and merchandized at ambient temperature with substantially little adverse affect on the microbial stability of the product. With respect to emulsion stability, shelf stability means the product can be distributed and merchandized at ambient temperature with substantially little adverse effect on the emulsion stability of the product. A product can be both shelf stable and retort stable.

As used herein, the term "aseptic processing and packaging" refers to the filling of a commercially sterilized product into pre-sterilized containers, followed by aseptic hermetical sealing, with a pre-sterilized closure, in an atmosphere free of microorganisms.

As used herein the term "emulsifier" refers to a surface-active agent that promotes the formation of an emulsion. The term "emulsifier" includes melting salts that are not conventional emulsifiers but that restore the emulsifying ability of milk proteins and/or are used to control the water activity and microbial stability of foods.

As used herein the term "stabilizer" refers to an agent that is added to a solution, mixture, suspension or composition in order to maintain the solution, mixture, suspension or composition in a stable or unchanging state or reduces or inhibits phase separation in the solution, mixture, suspension or composition. The term stabilizer also includes an agent that is added to a solution, mixture, suspension or composition to modify the rheology and/or texture of the finished solution, mixture, suspension or composition and/or to help facilitate the processing of the solution, mixture, suspension or composition.

As used herein, the term "phase separation" refers to the separation of a relatively uniform and homogeneous composition into two or more distinct and mechanically separable portions or layers.

As used herein, the term "separation volume" refers to the volume of material that separates from the rest of a composition after application of a destabilizing force or after a defined, extended period of time.

As used herein, the term "low fat" refers to an edible composition that has a fat level of less than about 15% by weight.

As used herein, the term "full fat" refers to an edible composition that has a fat level of more than about 30% by weight.

The term "low-acid food" as used herein means a food product with a finished equilibrium pH greater than 4.6 and a water activity (aw) greater than 0.85.

As used herein, the term "thermoplastic" refers to a material that softens or becomes more fluid and less viscous when heated and hardens or becomes more viscous again when cooled.

As used herein, the term "cheese base" refers to an edible composition that contains a stable emulsion of one or more natural, fresh and/or powdered cheeses, stabilizer, emulsifier, water and/or oil.

### II. Modes

The thermal processing necessary to achieve a shelf stable traditional dairy base or shelf stable sauce comprising a traditional dairy base typically destabilizes the oil-in-water emulsion to result in phase separation where the oil and/or water phase separates from the rest of the dairy base or sauce. The thermal processing also typically results in undesirable protein coagulation which affects the texture and consistency of traditional dairy bases or sauces comprising a traditional dairy base.

The dairy bases of the disclosure and/or food products comprising the dairy bases of the disclosure can be thermally processed, such as by retort processing, to produce shelf stable food products that comply with government and/or industry standards for commercial sterility. The dairy bases and/or food products comprising the dairy bases can be thermally processed at the time and temperature conditions necessary to achieve shelf stability and/or commercial sterility without adversely affecting the color, texture, mouth feel, flavor, thermoplasticity, viscosity, and/or appearance of the dairy bases or dairy-based sauces and can provide retortable, shelf-stable dairy bases and food products comprising the dairy bases that deliver the desired taste experience as a freshly prepared chef-created sauce without deterioration in color, texture, mouth feel, flavor and/or appearance. The disclosure further includes methods of making and using the dairy bases.

### A. Compositions

The dairy bases of the disclosure typically include a heat-stable dairy protein component, an oil component, and a stabilizer component. The heat-stable dairy protein component is a milk protein concentrate, milk protein isolate, whey protein concentrate, whey protein isolate, or mixtures thereof. The dairy protein component preferably has a high emulsion capacity, a high heat tolerance/stability, and a smooth structure providing a creamy taste and/or a creamy texture when added to a product. Examples of heat stable milk protein concentrates and milk protein isolates include, but are not limited to, NUTRILAC^{™} RM-4620, NUTRILAC^{™} RM-7020, NUTRILAC^{™} CH-7813, NUTRILAC^{™} QU-7560, NUTRILAC^{™} YO-7700, NUTRILAC^{™} LD-350, NUTRILAC^{™} 561, PSMD T42, PSMD T43, and SA-55-5 (Arla, Denmark), MPC42, MPC70, MPC75, MPC80, and MPC85 (Dairy Management Inc.), MPC80 (WMB Nutritional Corp., Rancho Cucamonga, CA), MPC5170, MPC5180, MPC80 Proteint milk protein isolate 5003 (Proteint Inc., St. Paul, MN), and ULTRANOR^{™} milk proteins (Kerry Dairy Ingredients, Ireland). Examples of heat stable whey protein concentrates and whey protein isolates include, but are not limited to, whey Protein Concentrate 7034H heat stable (Proteint Inc., St. Paul, MN), NUTRILAC^{™} 7020 (Arla, Denmark), THERMAX® 34 and THERMAX® 70 whey protein concentrates, THERMAX® 690 whey protein isolate, and Solmiko MPC 80 and Solmiko MPI (Glanbia Nutritionals, Inc. Monroe WI).

In an example, the milk protein concentrate comprises about 65% to about 69% protein, about 11% to about 15% fat, about 5.5% or less moisture, and about 4% or less minerals. In an example, the whey protein concentrate comprises about 69% to about 75% protein, about 18% to about 24% fat, about 5.5% or less moisture, and about 0.1g/100g sodium.

The concentration of the heat-stable dairy protein component can be up to about 50% by weight of the dairy base. In one example, the heat-stable dairy protein component comprises about 50% to about 40%, about 45% to about 35%, about 40% to about 30%, about 35% to about 25%, about 30% to about 20%, about 25% to about 15%, about 20% to about 10% , about 15% to about 5%, about 10% to about 1%, or about 5% to about 1% by weight of the dairy base. In another example, the heat-stable dairy protein component comprises from about 2% to about 14% by weight of the dairy base. In another example, the heat-stable dairy protein component comprises about 2%, about 2.5%, about 3%, about 3.5%, about 4%, about 4.5%, about 5%, about 5.5%, about 6%, about 6.5%, about 7%, about 7.5%, about 8%, about 8.5%, about 9%, about 9.5%, about 10%, about 10.5%, about 11%, about 11.5%, about 12%, about 12.5%, about 13%, about 13.5%, or about 14% by weight of the dairy base. In another example, the heat stable dairy protein component comprises from about 2% to about 7% weight of the dairy base. In another example, the heat stable dairy protein component comprises from about 3% to about 7% weight of the dairy base. In another example, the heat stable dairy protein component comprises from about 3% to about 8% by weight of the dairy base. In another example, the heat stable dairy protein component comprises from about 4% to about 7% by weight of the dairy base. In another example, the heat stable dairy protein component comprises from about 5% to about 7% by weight of the dairy base. In another example, the heat stable dairy protein component comprises from about 6% to about 7% by weight of the dairy base.

The oil component can be any fat or oil that is suitable for human or animal consumption. The fat can be an animal fat or vegetable fat. The fat can be fully or partially hydrogenated or comprise saturated fats. Examples of suitable oils and fats include, but are not limited to vegetable oils such as soy bean oil, sunflower oil, canola oil, modified canola oil, palm kernel oil, coconut oil, dairy fats, dairy crèmes, butter and the like. Preferred fats include vegetable oil, butter, and chicken fat.

In general, the amount of the oil component that is used to form the dairy base can vary depending on the desired dairy-based sauce, the type and concentration of the heat-stable dairy protein component, the homogenization conditions, the stabilizer component and the type and concentration of optional additives. The oil component can be up to 80% by weight of the dairy base. In an example, the oil component comprises less than about 80%, less than about 70%, less than about 60%, less than about 50%, less than about 40%, less than about 30%, less than about 20%, less than about 10%, less than about 5%, or less than about 1% by weight of the dairy base. In an example, the oil component comprises from about 60% to about 50% by weight of the dairy base. In another example, the oil component comprises about 50% to about 40%, about 45% to about 35%, about 40% to about 30%, about 35% to about 25%, about 30% to about 20%, about 25% to about 15%, about 20% to about 10% , about 15% to about 5%, about 10% to about 1%, or about 5% to about 1% by weight of the dairy base. In another example, the oil component comprises from about 10% to about 40% by weight of the dairy base. In another example, the oil component comprises from about 10% to about 30% by weight of the dairy base. In another example, the oil component comprises from about 7.5% to about 30% by weight of the dairy base. In another example, the oil component comprises from about 5% to about 30% by weight of the dairy base. In another example the oil component comprises from about 10% to about 0.1 % by weight of the dairy base. In another example, the oil component comprises from about 5% to about 0.1% by weight of the dairy base. In another example, the oil component comprises from about 1% to about 0% by weight of the dairy base.

The stabilizer component generally includes one or more gums. Examples of gums include, but are not limited to, sodium alginate, locust bean gum (LBG), Konjac, carrageenan _including iota, kappa, and lambda carrageenan, furcellaran, gum arabic, gum tragacanth, starches (from Seeds), starches (from Tubers), pectin, agar, gellan gum, carboxymethylcelluloses (CMC), methylcelluloses, hydroxypropylmethylcelluloses (HPMC), other cellulose derivatives, starch acetates, starch phosphates, hydroxypropyl starches, cross-linked starch, other starch modifications, gelatin or any combination of any of these. The gum can be gelling or non-gelling. Examples of gelling gums include, but are not limited to, guar, CMC, xanthan, LBG, tamarind, lambda carrageenan, and pectin. Gelling gums include, but are not limited to, kappa carrageenan, iota carrageenan, alginates, such as sodium alginates, gellan gum, agar, and gelatin.

In an example, the stabilizer component comprises one or more of guar, xanthan, LBG, konjac, and carrageenan. In an example, the stabilizer component comprises guar and xanthan, xanthan and LBG, xanthan and konjac, xanthan and carrageenan, or a combination thereof. In an example, the stabilizer component comprises about 70% to about 30%, about 60% to about 40%, or about 50% xanthan by weight. In an example, the stabilizer component comprises about 70% to about 30%, about 60% to about 40%, or about 50% guar by weight. In an example, the stabilizer component comprises about 70% xanthan and about 30% guar, about 60% xanthan and about 40% guar, and about 50% xanthan and about 50% guar by weight. In an example, the stabilizer component comprises about 70% guar and about 30% xanthan, about 60% guar and about 40% xanthan, and about 50% guar and about 50% xanthan by weight. In an example, the stabilizer component comprises about 90% to about 70% guar/xanthan blend by weight and about 10% to about 30% carrageenan by weight. In an example, the stabilizer component comprises about 5% to about 30%, about 10% to about 30% about 15% to about 30%, about 20% to about 30%, or about 25% to about 30% carrageenan by weight. In an example, the stabilizer component comprises about 30% to about 5%, about 25% to about 5%, about 20% to about 5% , about 15% to about 5%, or about 10% to about 5% carrageenan by weight. In an example, the stabilizer component comprises about 10%, about 20%, or about 30% carrageenan be weight. In an example, the stabilizer component comprises about 90% guar/xanthan blend and about 10% carrageenan, about 80% guar/xanthan blend and about 20% carrageenan, or about 70% guar/xanthan blend and about 30% carrageenan by weight.

The concentration of the stabilizer component can vary depending on the desired dairy-based sauce, the heat-stable dairy protein component, the processing conditions, and the retort conditions. In general, the stabilizer component comprises from about 10% to about 0.1 % by weight of the dairy base. In one example, the stabilizer component comprises from about 5% to about 0.1 % by weight of the dairy base. In another example, the stabilizer component comprises from about 4% to about 0.1 % by weight of the dairy base. In another example, the stabilizer component comprises from about 3% to about 0.1% by weight of the dairy base. In another example, the stabilizer component comprises from about 2% to about 0.1 % by weight of the dairy base. In another example, the stabilizer component comprises from about 1% to about 0.1% by weight of the dairy base. In another example, the stabilizer component comprises from about 0.2% to about 1.5% weight of the dairy base. In another example, the stabilizer component comprises from about 0.5% to about 0.9% weight of the dairy base.

The dairy base or a food product containing the dairy base, such as a sauce, can include a liquid component. The liquid component includes one or more liquids into which all the components of the dairy base are dispersed and/or dissolved. Examples of suitable liquids include, but are not limited to, water, fruit juice, wine, cream, skim milk, low fat milk, full fat milk, and the like. In an example, the liquid component comprises up to about 95%, about 50% to about 85%, about 50% to about 80%, about 60% to about 85%, about 60% to about 85%, or about 70% to about 80% by weight of the diary base of food product containing the dairy base. In an example, the liquid component is water.

The dairy base or a food product containing the dairy base can be a liquid, gel, semi-solid, or solid at room temperature or less, such as conventional refrigeration temperatures, before and/or after thermal processing, such as retort processing. In an example, the appearance, texture, elongation properties, and/or deformation properties of the dairy base is substantially similar to sliceable cheese, processed cheese, cream cheese, jello, custard, pudding, flan, or butter at room temperature or less, such as conventional refrigeration temperatures. The form and/or viscosity of the dairy base or the food product containing the dairy base at these temperatures can be selected by varying the stabilizer component or combination thereof, oil component, and/or heat stable dairy protein component; varying the combination of stabilizer components, oil components, and/or heat stable dairy protein component, and/or varying the concentration of stabilizer component(s), oil component(s), and/or heat stable dairy protein component(s). Gelling gums, non-gelling gums, and combinations of gelling and non-gelling gums can be used to modify the appearance, texture, elongation properties, and/or deformation properties of the dairy base texture of the dairy base or food product containing the dairy base. For example, if a cheese impression is desired a gelling gum or combination of gelling gums can be added to the dairy base to mimic cheese impression by increasing the setback or gelling upon cooling of the dairy base.

In an example, the type and concentration of the heat-stable dairy protein and/or the type and concentration of the stabilizer component can be selected to modify the viscosity of the dairy base or the food product containing the dairy base. For example, the viscosity of the dairy base having a stabilizer component comprising xanthan/guar gum blend can be increased at room temperature or less, such as conventional refrigeration temperatures, by adding an amount of carrageenan or substituting the xanthan/guar gum blend with an amount of carrageenan. Blends of xanthan and LBG or xanthan and konjac or guar and kappa carrageenan or xanthan, guar and iota carrageenan, for example, can be added to the dairy base to form a thermoreversible gel. Blends of xanthan and guar, for example, can be added in combination to the dairy base to form a soft gelling dairy base or a dairy base having high viscosity or set back.

When the dairy base or the food product containing the dairy base is thermally processed, preferably the viscosity of the dairy base or the food product containing the dairy base decreases to enhance and/or maximize heat transfer and reduce and/or minimize the thermal processing time and/or temperature to reduce the microbial load to a level that is safe for consumption or to achieve commercial sterility of the dairy base or the food product containing the dairy base. In an example, the type and concentration of the heat-stable dairy protein component and/or the type and concentration of the stabilizer component is selected to modify the viscosity of the dairy base or the food product containing the dairy base at thermal processing temperatures. For example, when the dairy base is formulated with carrageenan, retort processing in terms of heat transfer can be enhanced due to the decreased viscosity of the dairy base under the retort processing conditions.

For some uses it may be desirable to have a dairy base that has a higher viscosity at room temperature or refrigeration temperatures and lower viscosity at thermal processing temperatures or consumer serving temperatures. For example, the appearance, texture, elongation properties, and/or deformation properties of the dairy base can be engineered to be substantially similar to sliceable cheese, processed cheese, cream cheese, cream, or butter at room temperature or less, such as conventional refrigeration temperatures and similar to melted cheese, cream or butter at thermal processing temperatures or consumer serving conditions.

In an example, the viscosity of the dairy base or the food product containing the dairy base at a temperature of about 212 °F to about 260 °F at an amount of pressure that prevents boiling of the dairy base or food product comprising the dairy base is about 5 fold or more, about 6 gold or more, about 7 fold or more, about 8 fold or more, about 9 fold or more, about 10 fold or more, about 11 fold or more, about 12 fold or more, about 13 fold or more ,about 14 fold or more, about 15 fold or more ,about 16 fold or more, about 17 fold or more, about 18 fold or more, about 19 fold or more, about 20 fold or more, about 30 fold or more, about 40 fold or more, about 50 fold or more, about 60 fold or more, about 70 fold or more, about 80 fold or more, about 90 fold or more, or about 100 fold or more less than the viscosity of the dairy base or food product containing the dairy base at a temperature of about 75 °F at atmospheric pressure.

In an example, the viscosity of the dairy base or the food product containing the dairy base at a temperature of about 212 °F to about 260 °F at an amount of pressure that prevents boiling of the dairy base of food product comprising the dairy base is about 50,000 centipoise (cP) or less, about 45,000 cP or less, about 40,000 cP or less, about 35,000 cP or less, about 30,000 cP or less, about 25,000 cP or less, about 20,000 cP or less, about 15,000 cP or less, about 10,000 cP or less, about 5,000 cP or less, about 2,000 cP or less, or about 1,000 cP or less. In an example, the viscosity of the dairy base or the food product containing the dairy base at a temperature of about 212 °F to about 260 °F at an amount of pressure that prevents boiling of the dairy base of food product comprising the dairy base is about 50,000 cP to about 1,000 cP, about 45,000 cP to about 1,000 cP, about 40,000 cP to about 1,000 cP, about 35,000 cP to about 1,000 cP, about 30,000 cP to about 1,000 cP, about 25,000 cP to about 1,000 cP, about 20,000 cP to about 1,000 cP, about 15,000 cP to about 1,000 cP, about 10,000 cP to about 1,000 cP, about 5,000 cP to about 1,000 cP, or about 2,000 cP to about 1,000 cP.

In an example, the viscosity of the dairy base or the food product containing the dairy base at a temperature of about 230 °F to about 260 °F at an amount of pressure that prevents boiling of the dairy base or food product comprising the dairy base is about 50,000 or less, about 45,000 cP or less, about 40,000 cP or less, about 35,000 cP or less, about 30,000 cP or less, about 25,000 cP or less, about 20,000 cP or less, about 15,000 cP or less, about 10,000 cP or less, about 5,000 cP or less, about 2,000 cP or less, or about 1,000 cP or less. In an example, the viscosity of the dairy base or the food product containing the dairy base at a temperature of about 250 °F to about 260 °F at an amount of pressure that prevents boiling of the dairy base of food product comprising the dairy base is about 50,000 cP to about 1,000 cP, about 45,000 cP to about 1,000 cP, about 40,000 cP to about 1,000 cP, about 35,000 cP to about 1,000 cP, about 30,000 cP to about 1,000 cP, about 25,000 cP to about 1,000 cP, about 20,000 cP to about 1,000 cP, about 15,000 cP to about 1,000 cP, about 10,000 cP to about 1,000 cP, about 5,000 cP to about 1,000 cP, or about 2,000 cP to about 1,000 cP.

In some embodiments, the viscosity of the dairy base or food product comprising the dairy base is substantially similar before and after retort processing. For example, it may be desirable that the dairy base or a food product containing the dairy base, such as a sauce, has a similar viscosity before and after thermal processing, such as retort processing, at room temperature, refrigeration temperatures, consumer serving temperatures, or a combination thereof. In an example, the dairy base or food product comprising the dairy base after retorting sets back to the form and/or viscosity of the dairy base or the food product prior to retorting. In an example, the change in viscosity of the retorted dairy base or food product comprising the dairy base at ambient temperature compared to the viscosity of the dairy base or food product comprising the dairy base before retort at ambient temperature is less than about 15%, less than about 14%, less than about 13%, less than about 12%, less than about 11%, less than about 10%, less than about 9%, less than about 8%, less than about 6%, less than about 5%, less than about 4%, less than about 3%, less than about 2%, less than about 1%, less than about 0.5%, or less than about 0.1%. In an example, the change in viscosity of the retorted dairy base or food product comprising the dairy base at ambient temperature compared to the viscosity of the dairy base or food product comprising the dairy base before retort at ambient temperature is less than about 1%. In an example, the change in viscosity of the retorted dairy base or food product comprising the dairy base at ambient temperature compared to the viscosity of the dairy base or food product comprising the dairy base before retort at ambient temperature is less than about 0.5%. In an example, the change in viscosity of the retorted dairy base or food product comprising the dairy base at ambient temperature compared to the viscosity of the dairy base or food product comprising the dairy base before retort at ambient temperature is less than about 0.1%.

In addition to viscosity and form, the mouth feel of the dairy base or a food product comprising the dairy base can be selected by varying the stabilizer component, combination of stabilizer components, oil component(s), and/or concentration of stabilizer component(s) in the dairy base. For example, it has been discovered that use of a xanthan/guar gum blend to form the dairy base forms a dairy base with a smooth mouth feel.

The dairy base of the disclosure can also include one or more emulsifying salts, including melting salts. Examples of emulsifying salts include, but are not limited to the salts of phosphoric, citric, and tartaric acid, monosodium phosphate, disodium phosphate, disodium pyrophosphate, trisodium pyrophosphate, tetrasodium pyrophosphate, pentasodium tripolyphosphate, monosodium citrate, disodium citrate, potassium citrate, other sodium and potassium phosphate salts (mono, di, tri, poly, ortho, tetra, tetrameta, hexameta), and (mono, di, tri, poly, ortho, tetra, tetrameta, hexameta) sodium and potassium citrates, or a mixture thereof. In an example, the one or more emulsifying salts are added to the dairy base or a food product comprising the dairy base to control the water activity (A_{w}) and/or the microbial stability. In another example, the one or more emulsifying salts are added to the dairy base or a food product comprising the dairy base for adjusting the pH of the dairy base or food product to a desired pH. The concentration of the emulsifying salts is generally 1% or less by weight of the dairy base. In an example, the concentration of the emulsifying salt is from about 0.3% to about 1.0% by weight of the dairy base.

The dairy bases of the disclosure can include cheese or cheese powders. In an example, the dairy base comprises about 50% or less cheese or cheese powder by weight of the diary base. Dairy bases of the disclosure comprising cheese or cheese powers typically include an emulsifying component in the form of an emulsifying salt. The emulsifying salt can restore the emulsifying ability of milk proteins present in the cheese. In an example, the emulsifying salts include melting salts with very strong calcium-binding ability (affinity for calcium) that lead to the production of hard processed cheeses which contain fat in the form of very small globules. In an example, the emulsifying salt is about 1% or less by weight in the finished cheese-based dairy sauce. In an example, the emulsifying salt is about 0.7% to about 0.8% by weight in the finished cheese-based dairy sauce. In another example, the concentration of the emulsifying salt is about 0.5% by weight in the cheese-based dairy sauce and this level delivers a very smooth and good mouth feel to the sauce. In another example, the emulsifying salts are about 2% to about 3% by weight of the cheese dairy base and/or about 2% to about 3% of other protein.

Preferably the dairy base forms an emulsion that is stable at ambient temperature after thermal processing. Examples of thermal processing include, but are not limited to, retort processing, ultra-high temperature processing (UHT), high temperature, short-time (HTST) processing, low temperature, long time (LTLT) processing, aseptic processing, hot filling, pasteurization, microwave heating, irradiation, direct steam injection and the like. In an example, the thermal processing comprises heating the dairy base or a food product comprising the dairy base to at least 212 °F under an amount of pressure to prevent boiling of the dairy base or food product comprising the dairy base. In an example, the thermal processing comprises heating the dairy base or a food product comprising the dairy base to a temperature of about 212 °F to about 300 °F under an amount of pressure to prevent boiling of the dairy base or food product comprising the dairy base. In an example, the thermal processing comprises heating the dairy base or a food product comprising the dairy base to a temperature of about 212 °F to about 260 °F under an amount of pressure to prevent boiling of the dairy base or food product comprising the dairy base. In an example, the thermal processing comprises heating the dairy base or a food product comprising the dairy base to a temperature of about 230 °F to about 260 °F under an amount of pressure to prevent boiling of the dairy base or food product comprising the dairy base. In an example, the thermal processing comprises heating the dairy base or a food product comprising the dairy base to a temperature of about 240 °F to about 260 °F under an amount of pressure to prevent boiling of the dairy base or food product comprising the dairy base. In an example, the thermal processing comprises heating the dairy base or a food product comprising the dairy base to a temperature of about 250 °F to about 260 °F under an amount of pressure to prevent boiling of the dairy base or food product comprising the dairy base. In an example, the thermal processing comprises heating the dairy base or a food product comprising the dairy base to a temperature of about 250 °F to about 300 °F under an amount of pressure to prevent boiling of the dairy base or food product comprising the dairy base. The pressure can be direct pressure or indirect pressure.

In an example, the pressure to prevent boiling of the dairy base or food product comprising the dairy base is about 1 gauge pressure (psig) or greater. In another example, the pressure to prevent boiling of the dairy base or food product comprising the dairy base is from about 1 psig to about 300 psig, from about 1 psig to about 250 psig, from about 1 psig to about 200 psig, from about 1 psig to about 150 psig, from about 1 psig to about 100 psig, from about 1 psig to about 95 psig, from about 1 psig to about 90 psig, from about 1 psig to about 85 psig, from about 1 psig to about 80 psig, from about 1 psig to about 75 psig, from about 1 psig to about 70 psig, from about 1 psig to about 65 psig, from about 1 psig to about 60 psig, from about 1 psig to about 55 psig, from about 1 psig to about 50 psig, from about 1 psig to about 45 psig, from about 1 psig to about 40 psig, from about 1 psig to about 35 psig, from about 1 psig to about 30 psig, from about 1 psig to about 25 psig, from about 1 psig to about 20 psig, from about 1 psig to about 15 psig, from about 1 psig to about 10 psig, or from about 1 psig to about 5 psig. In another example, the pressure to prevent boiling of the dairy base or food product comprising the dairy base is about 300 psig, about 250 psig, about 200 psig, about 150 psig, about 100 psig, about 95 psig, about 90 psig, about 85 psig, about 80 psig, about 75 psig, about 70 psig, about 65 psig, about 60 psig, about 55 psig, about 50 psig, about 45 psig, about 40 psig, about 35 psig, about 30 psig, about 25 psig, about 20 psig, about 15 psig, about 10 psig, or about 5 psig.

Preferably the emulsion is stable at room temperature or ambient temperature for at least about 14 days, at least about 30 days, at least about 60 days, at least about 90 days, at least about 4 months, at least about 6 months, at least about 9 months, at least about 12 months, or at least about 18 months after thermal processing. In an example the thermal processing is retort processing. In an example, the emulsion is stable at room temperature or ambient temperature for about 14 days, about 30 days, about 60 days, about 90 days, about 4 months, about 6 months, about 9 months, about 12 months, or about 18 months after thermal processing. In an example, the thermal processing is retort processing. In an example, the emulsion is stable at room temperature or ambient temperature after application of a destabilizing force.

The stability of the emulsion can be characterized in terms of the phase separation volume or degree of phase separation. In general, the dairy base or a food product comprising the dairy base undergoes less than about 10%, less than about 9%, less than about 8%, less than about 7%, less than about 6%, less than about 5%, less than about 4%, less than about 3%, less than about 2%, less than about 1%, less than about 0.75% less than about 0.5%,, less than about 0.25%, or less than about 0.1 % by volume phase separation after thermal processing, such as retort processing when compared to a non-thermally processed dairy base or food product.

Examples of destabilizing conditions are described in the examples. In an example, phase separation of the dairy base or a food product comprising the dairy base is less than about 1% by volume in a 45 gram sample weighed in a 50 mL centrifuge tube at a temperature of 40°F after centrifugation at 450G ("low force") or 947G ("high force) for 5 minutes followed by boiling of the sample for 6 minutes ("low force") or 10 minutes ("high force) and additional centrifugation for another 5 minutes. In another example, phase separation of the dairy base or a food product comprising the dairy base undergoes less than about 1% by volume in a 45 gram sample weighed in a 50 mL centrifuge tube after centrifugation at 247G ("stress test low") for 5 minutes, heating at a temperature of about 100°C for 10 minutes, followed by additional centrifugation at 247G for 5 minutes. In another example, phase separation of the dairy base or a food product comprising the dairy base undergoes less than about 1% by volume in a 45 gram sample weighed in a 50 mL centrifuge tube after centrifugation at 450G ("stress test medium") for 5 minutes, heating at a temperature of about 100°C for 10 minutes, followed by additional centrifugation at 450G for 5 minutes. In another example, phase separation of the dairy base or a food product comprising the dairy base undergoes less than about 1% by volume in a 45 gram sample weighed in a 50 mL centrifuge tube after centrifugation at 980G ("stress test hard") for 5 minutes, heating at a temperature of about 100°C for 10 minutes, followed by additional centrifugation at 980G for 5 minutes.

The dairy base may be shear stable at high pressures. The type, combination, and concentration of stabilizer component can be selected to modify the shear stability of the dairy base. In an example, the dairy base is shear stable up to about 1500 psi, about 2000 psi, 2500 psi, 3000 psi, about 3500 psi, about 4000 psi, about 4500 psi, about 5000 psi, about 5500 psi, or about 6000 psi. In addition, the dairy base is acid stable. In an example, the dairy base is stable at pH values that range from about 3.0 to about 8.0. At acidic pH values, the dairy base may not require thermal processing to achieve a level of sterility or microbial stability suitable for commercialization. The dairy base is also heat stable at high temperatures. In an example, the dairy base is heat stable at temperatures as high as 265°C. Furthermore, the emulsion of the dairy base is freeze thaw stable. In an example, the dairy base or a food product comprising the dairy base undergoes less than about 10%, less than about 9%, less than about 8%, less than about 7%, less than about 6%, less than about 5%, less than about 4%, less than about 3%, less than about 2%, less than about 1%, less than about 0.75% less than about 0.5%,, less than about 0.25%, or less than about 0.1% by volume phase separation after one or more freeze thaw cycles.

The dairy base can be used to formulate a dairy base concentrate that contains up to 50% by weight heat-stable dairy protein component and up to 80% by weight of the oil component. Dairy base concentrates can be used to form dairy-based sauces after the appropriate degree of dilution to the desired end product. In this way, dairy base concentrates save time and resources by minimizing the amount of water that is added during preparation.

In addition, the dairy base can be spray dried to form a powder that can be reconstituted to form a dairy base and/or dairy-based sauce having the same physicochemical and sensorical characteristics as the non-dried dairy base. In general, any conventional spray drying equipment can be used to spray dry the dairy base and form a powder. In an example, the powdered dairy base can be first reconstituted to form a dairy base that is used to form retortable shelf-stable dairy-based sauces. In another example, the powdered dairy base can be added to other ingredients that can be used to form a dairy-based sauce without having to undergo reconstitution first. The powdered dairy base can also be used as a whitener or a colorant in food products. In an example, the powdered dairy base can be used as a coffee whitener or as a colorant in a variety of liquid beverages to help prevent browning reactions during thermal or retort processing.

The dairy base can be used to form a retortable dairy-based sauce that has minimal phase separation, browning or darkening, protein denaturation, coagulation and/or aggregation, and no apparent changes to the texture and viscosity after retort processing. The dairy bases and dairy-based sauces can be microbiologically stable, dependent on the degree of thermal processing. The dairy bases and dairy-based sauces are heat stable and can be retort processed and heated during food preparation without experiencing an emulsion break. The dairy bases and dairy-based sauces are also freeze-thaw tolerant, and as such can be frozen for a period of time greater than experienced with chef-prepared dairy or other sauces, for example up to about 4 weeks without emulsion break.

The retortable dairy bases and dairy-based sauces are also microbiologically shelf stable and safe for consumption in its original sealed package and can be stored after opening with refrigeration thus reducing the need for special handling requirements compared to conventional food ingredients, like sauces either freshly prepared at the time of cooking or reconstituted from powdered or dry formulations. Among the numerous attributes of the retortable dairy base is that it can replace or significantly reduce the need or amount of "mise en place" preparation of sauces by the cook or chef at the time of food preparation, including preparation from natural ingredients and/or reconstitution of dry formulations.

Dairy powders, flavors, colorants, spices, salt, and other optional ingredients may be added to the dairy base as desired or to a food product, such as a sauce, comprising the dairy base. In an example, the optional dry ingredients comprise about 0.1% to about 50%, about 0.1% to about 12%, about 0.1% to about 10%, about 0.1 % to about 7%, or about 0.1 % to about 5% by weight of the dairy base.

The dairy bases of the disclosure can be used to prepare any food product that includes traditional dairy bases including but not limited to finished sauces. Examples include, but are not limited to, cream sauces, pot pie, tomato-cream, stroganoff, and other cheese and non-cheese flavored sauces. Additional examples of food products that can include the dairy bases of the disclosure include, but are not limited to sliceable cheese, processed cheese, cheese sauce, cream cheese, custard, ice cream, pudding, flan, and butter or butter like spreads. The food product can include from about 1% to about 99% by weight of dairy base.

The dairy base can be used as a whitener or a colorant in food products. In an example, the dairy base can be used as a coffee whitener or as a colorant in a variety of liquid beverages to help prevent browning reactions during thermal or retort processing. In an example, the dairy base is used in powdered form or liquid form as a whitener or colorant.

The dairy base can include cheese, including but not limited to fresh cheese and cheese powders. Cheese-based sauces, such as Alfredo, Asiago, Monterey Jack, and other mild cheese sauces can also be prepared using the methods disclosed. Furthermore, finished sauces, such as Cheddar, White Cheddar, Processed cheese, Nacho and other cheddar type cheese sauces can be prepared using the techniques disclosed herein. Retortable dairy bases comprising cheese (e.g., cheese bases) can provide the extended shelf life, flavor and richness of pasteurized processed cheese spreads, cheese-based dairy sauces. The higher water content (and lower natural cheese content) may also reduce production costs of the cheeses bases while providing an extended dairy impression. Cheese bases comprising the dairy base of the disclosure are stable to freeze/thaw conditions, and due to lower cheese requirements, are more amenable to flavor and texture variation and control. The use of extremely low reducing sugar-containing cheeses, and of other dairy ingredients, can reduce or eliminate browning even at the high heat loads encountered during retort processing. Unlike cheese-based dairy sauces which are destroyed or unsuitably degraded by heat treatment during retort, the retortable cheese dairy bases are stable to retort conditions. The final retorted cheese-based dairy sauce retains good cheese color, flavor and texture, and browning is avoided.

### B. Methods of Making

The dairy bases of the disclosure are typically prepared by hydrating a protein component with water and mixing the hydrated protein with a stabilizer component-oil component mixture. The methods for making a dairy base of the disclosure typically include mixing an amount of heat-stable dairy protein component with a volume of hot or cold water to disperse and wet the protein, heating (if necessary) to hydrate the protein, mixing an amount of stabilizer component with an amount of oil component until the stabilizer component is uniformly dispersed in the oil component, adding the oil/stabilizer component mixture with the heat-stable dairy protein component mixture and any optional ingredients and homogenizing the mixture to form the dairy base.

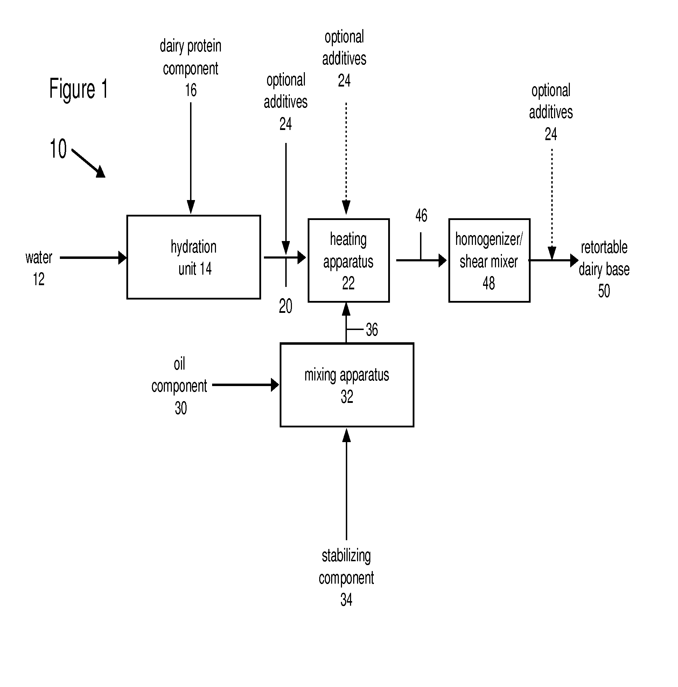

Figure 1 shows an exemplary method 10 of preparing a retortable dairy base. Initially, a water phase is prepared by adding hot water 12 at about 140°F to about 180°F to a hydration unit 14 that includes an agitator. Gentle agitation (e.g., low shear agitation) is started and a heat-stable dairy protein component 16 is added to the hot water 12 to form a protein-water mixture. Preferably, the agitation does not result in significant foam formation or the incorporation of excess air into the protein-water mixture. In some examples, foaming can be reduced by first mixing the dairy protein with cold water and then heating the mixture. The protein-water mixture is mixed for about 5 seconds to about 5 minutes to disperse and wet the protein. Mixing is then halted to allow the protein-water mixture to fully hydrate while minimizing the degree of air incorporation to form a hydrated protein component 20. Next, the hydrated protein component 20 is pumped into a heating apparatus 22, such as a swept surface kettle, for example. The heating apparatus 22 is equipped with an agitator to homogenously blend the hydrated protein component 20 while heating to a temperature of about 180°F.

Optional additives 24, such as dairy powders, flavors, colors, spices, salt, wine, and other ingredients may be added to the hydrated protein component 20 if a non-cheese dairy base is desired. Alternatively, the optional additives 24 may be added after the homogenization step 48 as shown in Figure 1.

In a separate step, an oil component 30 is added to a mixing apparatus 32. A stabilizer component 34 is added to the oil component 30 to form an oil/stabilizer mixture. The oil/stabilizer mixture is blended under low shear conditions until the stabilizer component is uniformly dispersed in the oil component and a stabilized oil phase 36 is attained.

After forming the stabilized oil phase 36, the stabilized oil phase 36 is added to the hydrated protein component 20 to form a non-homogenized dairy base. The non-homogenized dairy base 46 is mixed until uniformly blended while maintaining a temperature of about 165°F in the heating apparatus 22. Thereafter, the dairy base 46 is transferred to a homogenizer 48, such as a one-stage homogenizer, two-stage homogenizer, sonicator, shear mixer for homogenization, or other particle size reducing equipment. The 1^{st} stage of the homogenizer is typically set at about 1700 psi while the 2^{nd} stage is set at about 500 psi. The dairy base 46 is homogenized at a temperature that ranges from about 150°F to about 165°F to form a homogenized retortable dairy base 50. After homogenization, the homogenized retortable dairy base 50 is transferred to complete sauce preparation, retort processed and/or packaged for storage until further use.

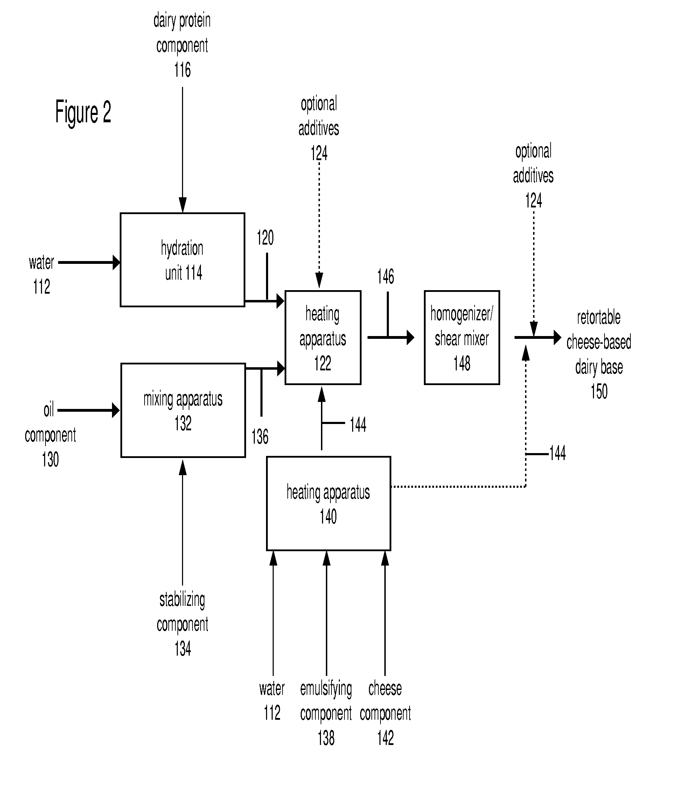

Figure 2 shows an alternate method 100 of preparing a cheese-based dairy base. In one step, a water phase is prepared by adding hot water 112 at about 140°F to about 180°F to a hydration unit 114 that includes an agitator. Gentle agitation (e.g., low shear agitation) is started and a heat-stable dairy protein component 116 is added to the hot water 112 to form a protein-water mixture. The protein-water mixture is mixed for about 5 seconds to about 5 minutes to disperse and wet the protein. Mixing is then halted to allow the protein-water mixture to fully hydrate while minimizing the degree of air incorporation to form a hydrated protein component 120. Next, the hydrated protein component 120 is pumped into a heating apparatus 122, such as a swept surface kettle, for example. The heating apparatus 122 is equipped with an agitator that is started to homogenously blend the hydrated protein component 120 while heating to a temperature of about 180°F.

Optional additives 124, such as dairy powders, flavors, colors, spices, salt, wine, and other ingredients may be added to the hydrated protein component 120 if a non-cheese dairy base is desired. Alternatively, the optional additives 124, such as chicken and vegetables may be added after the homogenization step 148 as shown in Figure 2.

In a second separate step, an oil component 130 is added to a mixing apparatus 132. A stabilizer component 134 is added to the oil component 130 to form an oil/stabilizer mixture. The oil/stabilizer mixture is blended under low shear conditions until the stabilizer component is uniformly dispersed in the oil component and a stabilized oil phase 136 is attained.

After forming the stabilized oil phase 136, the stabilized oil phase 136 is added to the hydrated protein component 120 in the heating apparatus 122 to form a dairy base mixture. To prepare a cheese base for use in cheese-based dairy bases and sauces, water 112 and an emulsifying component 138, such as an emulsifying salt are added to a heating apparatus 140 equipped with an agitator. Next, agitation is applied at a range of about 15-20 RPM to form an emulsifying salt-water mixture. Cheese 142 that is fragmented, such as by being broken up, flaked, ground and/or chunked, is added to salt-water mixture followed by heating to a temperature of about 160°F in the heating apparatus 140. After heating to about 160°F, this temperature is maintained with gentle agitation (e.g., low shear agitation) until the cheese mixture is completely melted and a cheese base is formed. Thereafter, the cheese base 144 can be (1) added to the dairy base in the heating apparatus 122 prior to homogenization (Figure 2), or (2) homogenized separately at high pressure or low pressure in a homogenizer (not shown) to form a homogenized cheese base (not shown) and/or stored for later use.

As depicted in Figure 2, optional additives 124 can be combined with the cheese base 144 and dairy base in the heating apparatus 122 to form a cheese-based dairy mixture 146. The dairy mixture 146 is further mixed until uniformly blended while maintaining a temperature of about 165°F in the heating apparatus 22. Thereafter, the dairy mixture 146 is transferred to a homogenizer 148 and homogenized at a temperature that ranges from about 150°F to about 165°F to form a homogenized cheese-based dairy base 150. After homogenization, the homogenized dairy base 150 is transferred to complete sauce preparation or packaged for storage until further use. Alternatively, both the optional additives 124 and cheese base 144 can be added after homogenization of the dairy base 146 to form the retortable cheese-based dairy base 150.

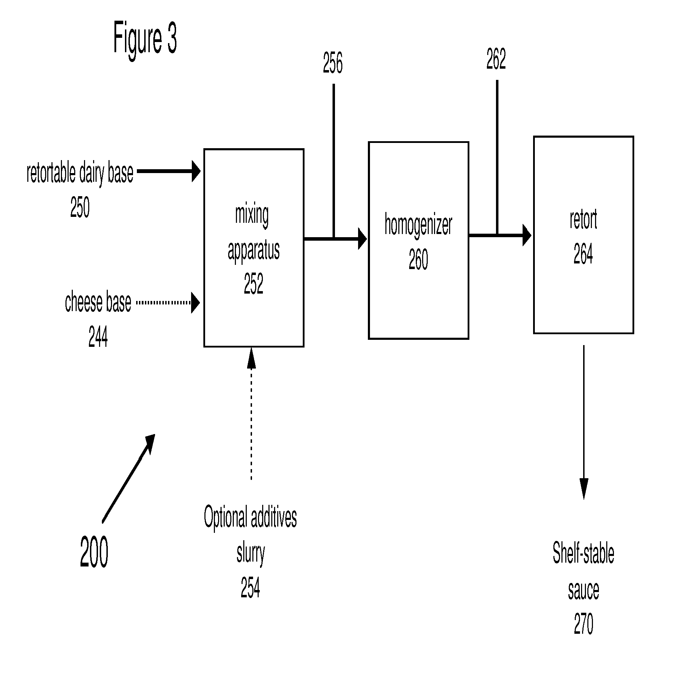

An exemplary method to form a shelf-stable sauce is illustrated at 200 in Figure 3. Briefly, a retortable dairy base 250 is placed in a mixing apparatus 252 equipped with a heater. If a cheese-based sauce is desired, a cheese base 244 is added to the dairy base 250 along with a slurry of any optional additives 254 to form a dairy sauce mixture. The dairy sauce mixture is homogeneously mixed in the mixing apparatus 252 at a temperature of about 165°F to about 176°F for about 1 minute to form a retortable dairy-based mixture 256.

The dairy-based mixture 256 is transferred to a homogenizer 260 and homogenized at high or low pressure to form a homogenized dairy or cheese-based sauce 262. In an example, the pressure is about 725 psi to about 2200 psi. In another example, the dairy-based mixture is mixed with a shear mixer to form a homogenously blended dairy or cheese-based sauce. In another example, the dairy-based mixture is not homogenized prior to thermal processing.

After homogenization, the sauce 262 is filled into cans or any suitable retort container and retorted at a temperature of about 212°F to about 300°F for as much time as needed to form a commercially sterile dairy-based sauce 270 that can be stored at room temperature for extended time periods. In addition, it is to be understood that while Figure 3 includes the step of retort processing to form commercially sterile product, the retort processing step can also be any thermal processing step that is effective to reduce a microbial load of the dairy base and/or dairy-based sauce. For example, thermal processing may include the degree of processing that is suitable to reduce microbial counts to a level where the dairy base and/or dairy-based sauce is stable for at least 3 months in an unopened container and/or for at least 2 weeks after opening and subsequent storage at refrigeration conditions.

In another example, thermal processing includes subjecting the sauce 262 to any combination of temperature and time conditions, such as those used during hot filling of liquids where at minimum temperature of at least about 180°F and not exceeding about 190-192°F. In a third example, thermal processing includes subjecting the sauce to any combination of microwave, irradiation, heat and/or pressure application to the dairy base and/or dairy-based sauces described herein. In a fourth example, thermal processing includes application of temperatures of about 180°F to about 200°F.

After retort or thermal processing, the shelf stable dairy-based sauce 270 is cooled and then stored at room temperature. In an embodiment, the shelf stable dairy-based sauce 270 is cooled to a temperature of about 104°F or less.

### EXAMPLES

The disclosure may be better understood with reference to the following examples. These examples are intended to be representative of specific embodiments and are not intended as limiting the scope of the disclosure.

### Example 1

### Preparation of a Retortable Dairy Base

Exemplary formulations of the dairy base of the disclosure are shown in Table 1. The concentration units disclosed in Table 1 are percent (%) by weight dairy base unless specified otherwise.

**Table 1**

| **Dairy Base Formula** | **#1** | **#2** | **#3** | **#4** | **#5** | **#6** | **#7** | **#8** | **#9** | **#10** | **#11** | **#12** |
|---|---|---|---|---|---|---|---|---|---|---|---|---|
| **Ingredients** | | | | | | | | | | | | |
| | | | | | | | | | | | | |
| Water | 77.67 | 79.67 | 79.67 | 83.53 | 64.67 | 79.79 | 63.67 | 63.67 | 71.10 | 77.67 | 64.62 | 79.64 |
| Vegetable Oil¹ | 15.00 | 15.00 | 15.00 | 10.00 | 30.00 | 15.00 | 30.00 | 30.00 | 22.00 | 15.00 | 30.05 | 15.03 |
| Milk Protein Concentrate² | 6.52 | 4.52 | 4.52 | 5.50 | 4.52 | 5.00 | 5.52 | 5.52 | 6.00 | 6.52 | 4.52 | 0.00 |
| Whey Protein Concentrate³ | 0.00 | 0.00 | 0.00 | 0.00 | 0.00 | 0.00 | 0.00 | 0.00 | 0.00 | 0.00 | 0.00 | 4.52 |
| Locust Bean Gum | 0.00 | 0.61 | 0.00 | 0.00 | 0.00 | 0.00 | 0.00 | 0.00 | 0.00 | 0.00 | 0.00 | 0.00 |
| Carrageenan | 0.81 | 0.00 | 0.00 | 0.00 | 0.00 | 0.00 | 0.00 | 0.81 | 0.35 | 0.00 | 0.00 | 0.00 |
| Xanthan Gum | 0.00 | 0.20 | 0.57 | 0.63 | 0.57 | 0.57 | 0.57 | 0.00 | 0.35 | 0.57 | 0.57 | 0.57 |
| Guar Gum | 0.00 | 0.00 | 0.24 | 0.34 | 0.24 | 0.24 | 0.24 | 0.00 | 0.20 | 0.24 | 0.24 | 0.24 |
| **Total Percent** | **100.0** | **100.0** | **100.0** | **100.0** | **100.0** | **100.0** | **100.0** | **100.0** | **100.0** | **100.0** | **100.0** | **100.0** |

| | | | | | | | | | | | | |
|---|---|---|---|---|---|---|---|---|---|---|---|---|
| ¹ Vegetable oil is canola or soybean oil. ² Milk protein concentrate is NUTRILAC™ 561 (Arla Food Ingredients, Denmark). ³ Whey protein concentrate is NUTRILAC™ 7020 (Arla Food Ingredients, Denmark). | | | | | | | | | | | | |

For formulas 1-10, milk protein concentrate was added to water at 140°F to form a protein-water mixture and blended under low shear conditions until smooth. In a separate step, the vegetable oil was added to the stabilizer (locust bean, carrageenan, xanthan and/or guar gum) to form an oil-stabilizer system. Next, the protein-water mixture was heated to 180°F. After reaching 180°F, the oil-stabilizer system was added to the protein-water mixture and stirred gently (e.g., low shear) to form a homogenous dairy base mixture. The dairy base was subsequently homogenized at a temperature of about 165°F in a two-stage homogenizer. The 1^{st} stage was operated at 1700 psi while the 2^{nd} stage was operated at 500 psi. All dairy bases were homogenized at 2200 psi except for formulas 5 and 6, which were homogenized at 2000 psi (1^{st} stage - 1500 psi, 2^{nd} stage 500 psi). After homogenization, dairy base samples were placed in to polypropylene thermoformed trays and retorted at a temperature of about 250°F for a hold time of about 10 minutes at 30 psi.

For formulas 11 and 12, milk or whey protein concentrate was added to water at a temperature of about 132°F to form a protein-water mixture. The protein-water mixture was stirred under low shear conditions to dissolve the protein concentrate and remove any lumps while minimizing the incorporation of excess air. After stirring, the protein-water mixture was heated to 180°F. In a separate step, xanthan and guar gums were added to the vegetable oil and stirred under low shear conditions until the gums were dispersed. During gum dispersion, continuous agitation was provided to prevent premature settling of the gums at the bottom of the container. Next, the gum/oil mixture was added to the protein-water mixture at a temperature of about 180°F and stirred under low shear conditions to aid in forming an oil-in-water dairy base emulsion. The dairy base emulsion was subsequently homogenized at 3500 psi in a two-stage homogenizer.

### Example 2

### Preparation of Sauce Comprising Retortable Dairy Base

Retortable dairy-based sauces were prepared by combining dairy bases from Example 1 with the Jack or Cheddar bases. Exemplary cheese base formulations are shown in Table 2. The concentration units disclosed in Table 2 are percent (%) by weight of the total cheese base unless specified otherwise.

**Table 2**

| **Cheese Base Formula** | 1 | 2 | 3 | 4 |
|---|---|---|---|---|
| Jack cheese | 65.36 | 0 | 65.46 | 0 |
| White cheddar | 0 | 65.36 | 0 | 65.46 |
| Water | 32.68 | 32.68 | 32.73 | 32.73 |
| Joha S9 emulsifying salt¹ | 1.96 | 1.96 | 1.81 | 1.81 |
| **TOTAL** | 100 | 100 | 100 | 100 |

| | | | | |
|---|---|---|---|---|
| ¹ Joha S9 emulsifying salts, BK Giulini (Simi Valley, CA). | | | | |

For cheese base formulas 1 and 2, tap water, cheese (Jack or Cheddar) and Joha S9 emulsifying salts were mixed with heating until a temperature of about 160°F was reached to form an unmelted cheese base. The cheese base was further blended under low shear conditions until smooth and all the cheese had melted.

For cheese base formulas 3 and 4, the emulsifying salt (Joha S9 phosphate) was added to tap water in a jacketed kettle. The salts were mixed at about 100°F to 120°F until the phosphates were completely dispersed in the water. Next, cheese (Jack or Cheddar) was added to the phosphate mixture and the ingredients were heated to a temperature of about 160°F to form an unmelted cheese base. The unmelted cheese base was stirred under low shear conditions while maintaining the temperature of about 160°F until all the cheese was melted.

Example formulations of retortable dairy-based sauces are shown in Table 3.
The dairy base in the sauces of Table 3 is dairy base formula 1 of Example 1 which had a 15% by weight fat level. The Jack base in Table 3 corresponds to cheese base formula 1 from Table 2. The Cheddar base in Table 3 corresponds to cheese base formula 3 from Table 2. The concentration units disclosed in Table 3 are percent (%) by weight of the total dairy base unless specified otherwise.

**Table 3**

| **Formula** | **1** | **2** | **3** | **4** |
|---|---|---|---|---|
| Water | 35.98 | 34.65 | 34.90 | 36.70 |
| Dairy Base | 25.00 | 25.00 | 25.00 | 20.00 |
| Jack Base³ | 30.00 | 30.00 | 30.00 | 0.00 |
| Salt | 1.55 | 1.55 | 1.30 | 0.85 |
| Garlic Powder | 0.10 | 0.10 | 0.10 | 0.00 |
| Black Pepper, Cracked | 0.10 | 0.02 | 0.02 | 0.00 |
| Ground nutmeg | 0.07 | 0.02 | 0.02 | 0.00 |
| Romano flavor¹ | 0.40 | 0.40 | 0.40 | 0.00 |
| Cream replacer² | 0.30 | 0.40 | 0.40 | 0.00 |
| Parmesan flavor³ | 0.20 | 0.40 | 0.40 | 0.00 |
| Sherry wine | 6.00 | 5.00 | 5.00 | 0.00 |
| Xanthan gum | 0.10 | 0.10 | 0.10 | 0.15 |
| Guar gum | 0.20 | 0.30 | 0.30 | 0.25 |
| Joha S9 emulsifying salt⁴ | 0.00 | 0.06 | 0.06 | 0.05 |
| Parmesan cheese | 0.00 | 2.00 | 2.00 | 0.00 |
| Cheddar base | 0.00 | 0.00 | 0.00 | 40.00 |
| Cheddar flavor⁵ | 0.00 | 0.00 | 0.00 | 1.00 |
| Cheddar flavor⁶ | 0.00 | 0.00 | 0.00 | 0.20 |
| Annato, liquid | 0.00 | 0.00 | 0.00 | 0.80 |
| **TOTAL** | **100.00** | **100.00** | **100.00** | **100.00** |
| | | | | |
| | | | | |
| Sauce⁷ | 0.00 | 76.60 | 0.00 | 74.00 |
| Broccoli fines | 0.00 | 1.40 | 0.00 | 2.00 |
| Diced Chicken | 0.00 | 24.00 | 0.00 | 240.00 |
| **TOTAL** | **0.00** | **100.00** | **0.00** | **100.00** |

| | | | | |
|---|---|---|---|---|
| ¹ Romano flavor, Givaudan Romano flavor #3009762 (Givaudan Flavors Corp., Cincinnati, OH). ²Cream replacer Givaudan #JL-088-325-4 (Givaudan Flavors Corp., Cincinnati, OH). ³ Parmesan flavor, Givaudan parmesan flavor #3009708 (Givaudan Flavors Corp., Cincinnati, OH). ⁴ Joha S9 emulsifying, BK Giulini Corp (Simi Valley, CA) ⁵ Cheddar flavor, Givaudan Cheddar Flavor #1A-396-761-8 (Givaudan Flavors Corp., Cincinnati, OH). ⁶ Cheddar flavor, Givaudan Cheddar flavor #638731 (Givaudan Flavors Corp., Cincinnati, OH). ⁷ Sauce refers to the sauce prepared above. | | | | |

The Alfredo sauce of formula 1 was prepared by adding the dairy base to the cheese base and homogenizing the mixture in a two-stage homogenizer at 2200 psi. After homogenization, the dairy base was uniformly blended with remaining sauce ingredients and cooked to 165°F, creating a dairy based sauce. 175 ml of sauce was used to fill metal cans in which 10 ml of head space was allowed. Retort processing was accomplished using an F-value of 5 at 250°C.

The Alfredo sauce of formula 2 was prepared by adding the dairy base to the cheese base and homogenizing the mixture in a two-stage homogenizer at 2200 psi. After homogenization, all the other ingredients except the broccoli and chicken were added to the dairy based sauce and then the sauce was transferred to a mixer equipped with a heating apparatus. The dairy based sauce was heated to 165°F and homogenized at 725 psi. After homogenization, the broccoli fines and diced chicken were then added to the dairy-based sauce and uniformly blended to form a chicken Alfredo sauce. The chicken Alfredo sauce was commercially sterilized in a retort processor operated at 250°F for a hold time of about 10 minutes at 30 psi.

The Alfredo sauce of formula 3 was prepared by was prepared by separately homogenizing the dairy sauce and cheese sauce in a two-stage homogenizer operated at 2200 psi. The dairy base and cheese base were then uniformly blended under low shear conditions with each other along with all the other ingredients to form a dairy-based Alfredo sauce. The dairy-based sauce was heated to a temperature of about 165°F and homogenized in a two-stage homogenizer operated at 725 psi. After homogenization, the dairy-based sauce was placed in polypropylene thermoformed trays and commercially sterilized in a water immersion retort at 250°F for a hold time of about 10 minutes at 30 psi.

The Alfredo sauce of formula 4 was prepared using dairy base formula 1 from Example 1 in combination with the cheese base formula 2 shown in Table 2. The dairy and cheese bases were separately prepared and then homogenized together at 3000 psi in a two-stage homogenizer. After homogenization, all the other ingredients except for the diced chicken and broccoli fines were mixed under low shear conditions into the homogenized base and heated to 165°F. After cooling, the diced chicken and broccoli fines were added to the sauce and uniformly blended under low shear conditions to form a chicken Alfredo sauce. The chicken Alfredo sauce was commercially sterilized in a retort processor operated at about 250°F for a hold time of about 10 minutes at 30 psi.

### Example 3

### Visual Characterization of Sauces Comprising Retortable Dairy Base

Alfredo (T1BMD, T2BMD, T3BMD, T4BMD) and stroganoff sauces (Strog) were prepared with a retortable dairy base and compared to MARIE CALLENDAR'S™ Alfredo sauce (Ctrl-Alf) or MARIE CALLENDAR'S® stroganoff sauce (StrogScr) before and after retort processing. The sauce formulations are shown in Table 4.

**Table 4**

| | **T1BMD** | **T2BMD** | **T3BMD** | **T4BMD** | **Strog.** |
|---|---|---|---|---|---|
| **DAIRY BASE** | 36% | 50% | 39.44% | 55% | 25.64% |
| Water | 77.67 | 77.67 | 77.67 | 77.67 | 77.67 |
| Vegetable Oil² | 15.00 | 15.00 | 15.00 | 15.00 | 30.00 |
| Milk Protein Concentrate³ | 6.52 | 6.52 | 6.52 | 6.52 | 6.52 |
| Xanthan gum | 0.43 | 0.43 | 0.43 | 0.43 | 0.57 |
| Guar Gum | 0.18 | 0.18 | 0.18 | 0.18 | 0.24 |
| Carrageenan (iota) | 0.20 | 0.20 | 0.20 | 0.20 | 0.00 |
| **TOTAL** | **100.00** | **100.00** | **100.00** | **100.00** | **100.00** |
| | | | | | |
| **CHEESE BASE** | 30% | 0.00% | 30% | 0% | 0% |
| Cheese⁴ | 65.36³ | 0.00 | 65.36³ | 0.00 | 0.00 |
| Water | 32.68 | 0.00 | 32.68 | 0.00 | 0.00 |
| Joha S9 emulsifying salt | 1.96 | 0.00 | 1.96 | 0.00 | 0.00 |
| **TOTAL** | **100.00** | **0.00** | **100.00** | **0.00** | **0.00** |
| | | | | | |
| **SLURRY** | **44%** | **50%** | **30.56%** | **45%** | **74.36%** |
| Water | 27.40 | 65.60 | 16.40 | 45.05 | 65.13 |
| Salt | 1.80 | 3.82 | 2.00 | 1.32 | 0.87 |
| Sherry wine | 14.70 | 18.22 | 16.40 | 11.01 | 0.00 |
| salted butter | 11.80 | 7.28 | 16.40 | 13.21 | 3.44 |
| Xanthan gum | 0.00 | 0.36 | 0.00 | 0.11 | 0.00 |
| Guar Gum | 0.00 | 1.08 | 0.00 | 0.11 | 0.00 |
| Grated parmigiano-reggiano⁵ | 44.00 | 3.64 | 47.40 | 0.00 | 0.00 |
| Cheese Powder | 0.00 | 24.40 | 0.00 | 22.01 | 0.00 |
| Enzyme Modified Cheese | 0.00 | 4.10 | 0.00 | 5.94 | 0.00 |
| Joha S9 emulsifying salt | 0.00 | 0.20 | 1.20 | 0.81 | 0.00 |
| Spices/Seasoning Pepper | 0.30 | 0.50 | 0.30 | 0.43 | 0.19 |
| Beef Base | 0.00 | 0.00 | 0.00 | 0.00 | 5.58 |
| Diced onions | 0.00 | 0.00 | 0.00 | 0.00 | 12.06 |
| Modified food starch | 0.00 | 0.00 | 0.00 | 0.00 | 3.79 |
| Brown sugar | 0.00 | 0.00 | 0.00 | 0.00 | 1.72 |
| Stroganoff Flavor | 0.00 | 0.00 | 0.00 | 0.00 | 2.93 |
| Sour cream flavor | 0.00 | 0.00 | 0.00 | 0.00 | 0.30 |
| Mushroom flavor powder | 0.00 | 0.00 | 0.00 | 0.00 | 0.35 |
| Wine, Chardonnay | 0.00 | 0.00 | 0.00 | 0.00 | 3.36 |
| Caramel Color | 0.00 | 0.00 | 0.00 | 0.00 | 0.27 |
| **TOTAL** | **100.00** | **100.00** | **100.00** | **100.00** | **100.00** |

| | | | | | |
|---|---|---|---|---|---|
| ¹ Vegetable oil is canola vegetable oil. ² Milk protein concentrate is NUTRILAC™ 561 (Arla Food Ingredients, Denmark). ³Cheese is fresh cheese ⁴Cheese is powdered cheese, supplied by Dairi Concepts ⁵Grated parmigiano-reggiano, supplied by Rochester Cheese Co. (Rochester, MN) | | | | | |

The retortable dairy base sauces were prepared as follows. Cold water < 100°F was added to a liquefier. Low shear agitation was started in the water and milk protein concentrate was added to the cold water. The protein-water mixture was mixed under low shear conditions for 1-3 seconds to disperse and wet the protein. Mixing was then halted and the protein mixture was pumped into a swept surface kettle. Low shear agitation was started in the kettle while heating the protein-water mixture to 180°F, allowing the protein to fully hydrate. This process minimized the degree of air incorporation.

Oil was added to the liquefier (or to a smaller vessel with a lighting mixer) after the hydrated protein mixture was transferred to the swept surface kettle. The gums were then added to the oil and agitation was set to a low-medium speed and started. The oil/gum mixture was blended until uniform and pumped to the swept surface kettle. Agitation was increased in the swept surface kettle to ensure both the hydrated protein mixture and oil/gum mixture were uniformly blended while maintaining a temperature of about 165-175°F. The agitation was controlled to minimize the degree of air incorporation and foam formation. After uniform blending, the dairy base was transferred into a two-stage homogenizer for homogenization. The 1^{st} stage of the homogenizer was set at 1700 psi while the 2^{nd} stage was set at 500 psi. The dairy base was homogenized at a temperature that ranged from about 150°F to about 165°F.

To prepare the cheese base, cheese was initially fragmented. Water and emulsifying salts were added to a jacketed swept surface cook kettle. Next, agitation was applied at a range of 15-20 RPM to the salt-water mixture for gentle mixing. Cheese was added to the salt-water mixture followed by heating to a temperature of about 160°F. After heating to 160°F, this temperature was maintained with gentle agitation until the cheese mixture was completely melted and smooth. After melting, the cheese base was homogenized at 2200 psi in a two stage homogenizer.

After homogenization, both cheese and dairy bases were added to a steam heated scraped surface jacketed kettle. The slurry ingredients disclosed in Table 4 were added to the kettle and mixed at high speed for 1 minute. The mixture was heated to 176°F and then homogenized at 500 psi in a two stage homogenizer. After homogenization, the sauce was filled into the cans and retorted at the conditions disclosed in Table 5.

**Table 5**

| | **T1BMD** | **T2BMD** | **T3BMD** | **T4BMD** | **Strog.** |
|---|---|---|---|---|---|
| Water immersion | yes | yes | yes | yes | yes |
| RPM | 8 | 8 | 8 | 8 | 8 |
| Come up time (minutes) | 13.5 | 13.5 | 13.5 | 13.5 | 13.5 |
| Hold time (minutes) | 11 | 11 | 11 | 11 | 10.2 |
| Cooling time (minutes) | 30 | 30 | 30 | 30 | 30 |
| Retort temperatures (F) | 250 | 250 | 250 | 250 | 250 |
| Gauge pressure (psi) | 30 | 30 | 30 | 30 | 30 |
| | | | | | |

After retorting, the product was cooled to 104°F and stored at room temperature.

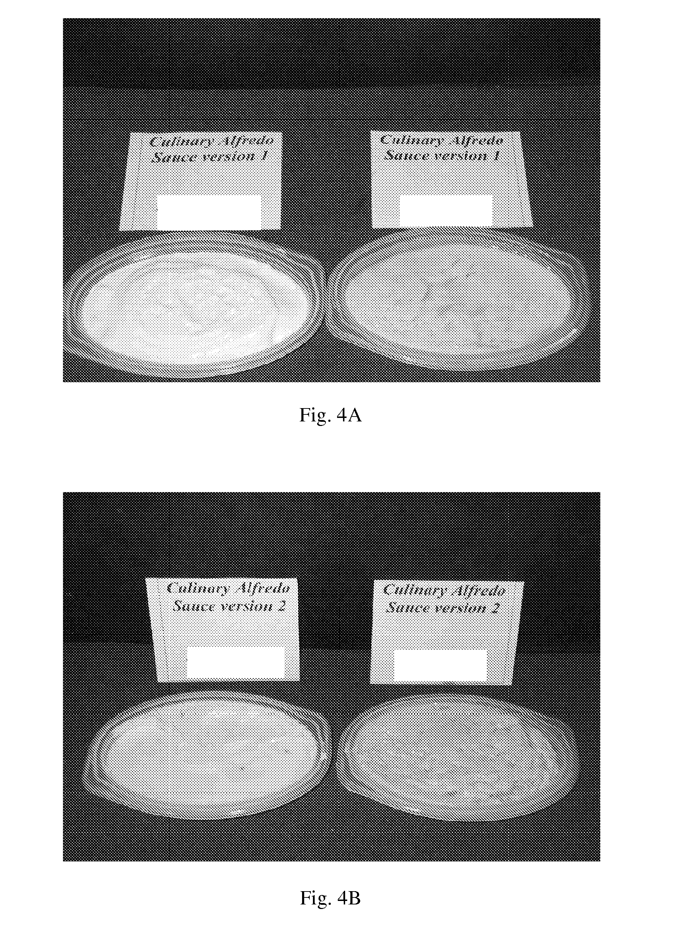

The sauces were also visually characterized before and after retort. Figure 4 shows the Alfredo-control sauce before and after retort. Figures 4A and 4B show that retort processing of the Alfredo-control sauce causes extensive browning and protein coagulation that results in destabilization of the emulsion.

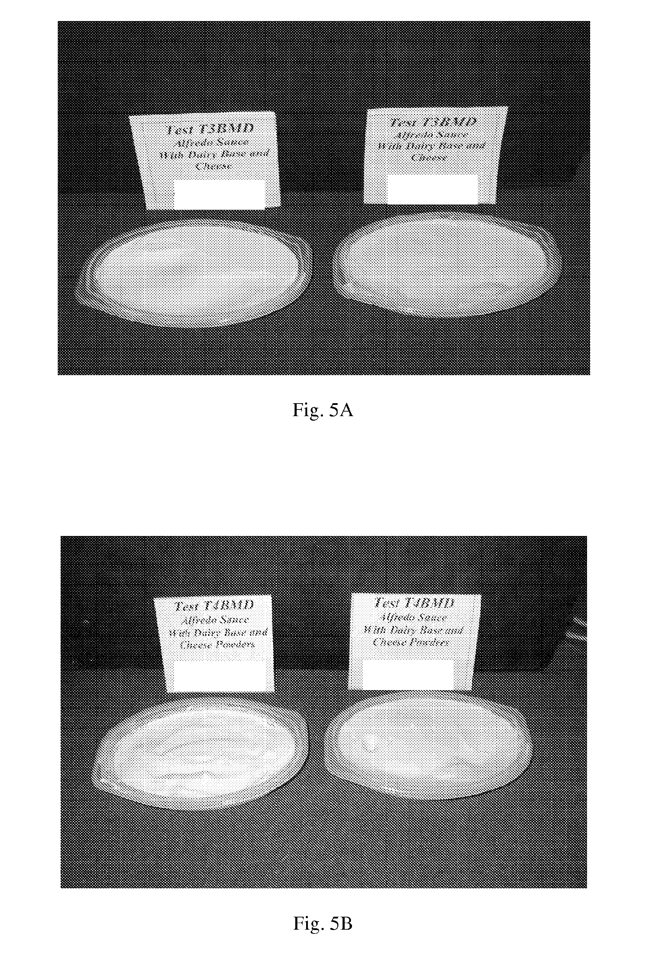

Figures 5A and 5B show T3BMD (Alfred sauce with dairy base and fresh cheese) sauce and T4BMD (Alfred sauce with dairy base and cheese powder) before and after retort processing. Both sauces exhibited minimal browning after retort and there was no destabilization of the emulsion. The appearance of T1BMD and T2BMD after retort was very similar to the appearance of the Alfredo-control sauce before retort.

### Example 4

### Sensorical Evaluation of Retortable Dairy Base Alfredo Sauce

A retortable dairy-based Alfredo sauce was compared to MARIE CALLANDER'S® Alfredo Sauce (Control) to determine which sauce consumers preferred. The results of the taste test are shown in Table 6. Samples were evaluated in terms of overall liking, appearance liking, flavor liking and texture liking on a 9 point scale (9 being best). In general, MARIE CALLANDER'S® Alfredo Sauce (Control) liking scores ranged from about 5.0 to about 6.1. The retortable Alfredo dairy-based sauce liking scores ranged from about 6.3 to about 7.5 in a sample size of 27 adults. The consumers tested preferred the retortable dairy base Alfredo sauce over the MARIE CALLANDER'S® Alfredo Sauce (Control) in all categories tested.

**Table 6**

| Alfredo Sauce comparison (9 point scale, 9 is best) | | | | | | | | |
|---|---|---|---|---|---|---|---|---|
| | MARIE CALLANDER'S® Alfredo Sauce (control) | | | | **Dairy-based Alfredo sauce** | | | |
| | Overal 1 Liking | Appearance Liking | Flavor Liking | Texture Liking | Overall Liking | Appearance Liking | Flavor Liking | Texture Liking |
| 1 | 6 | 6 | 6 | 6 | 8 | 8 | 8 | 8 |
| 2 | 4 | 4 | 4 | 5 | 6 | 7 | 6 | 6 |
| 3 | 7 | 7 | 7 | 8 | 6 | 6 | 6 | 5 |
| 4 | 2 | 3 | 2 | 2 | 7 | 7 | 6 | 7 |
| 5 | 4 | 8 | 4 | 8 | 8 | 7 | 8 | 8 |
| 6 | 7 | 4 | 7 | 7 | 9 | 8 | 9 | 8 |
| 7 | 5 | 5 | 5 | 4 | 8 | 8 | 8 | 7 |
| 8 | 8 | 6 | 8 | 6 | 6 | 8 | 5 | 8 |
| 9 | 4 | 7 | 4 | 7 | 8 | 8 | 8 | 7 |
| 10 | 7 | 4 | 7 | 4 | 3 | 7 | 3 | 6 |
| 11 | 7 | 8 | 7 | 8 | 6 | 7 | 4 | 8 |
| 12 | 7 | 5 | 6 | 5 | 7 | 7 | 7 | 5 |
| 13 | 7 | 5 | 7 | 6 | 7 | 9 | 6 | 8 |
| 14 | 7 | 6 | 7 | 7 | 6 | 8 | 7 | 6 |
| 15 | 7 | 4 | 8 | 3 | 8 | 9 | 7 | 9 |
| 16 | 5 | 5 | 4 | 6 | 6 | 7 | 6 | 4 |
| 17 | 8 | 8 | 8 | 7 | 8 | 8 | 7 | 8 |
| 18 | 3 | 3 | 3 | 3 | 6 | 8 | 6 | 8 |
| 19 | 7 | 4 | 8 | 6 | 6 | 6 | 5 | 7 |
| 20 | 3 | 4 | 2 | 2 | 7 | 8 | 7 | 8 |
| 21 | 7 | 7 | 8 | 7 | 3 | 8 | 3 | 8 |
| 22 | 6 | 4 | 8 | 7 | 6 | 7 | 7 | 6 |
| 23 | 7 | 4 | 8 | 8 | 7 | 8 | 8 | 8 |
| 24 | 6 | 5 | 6 | 6 | 7 | 9 | 7 | 9 |
| 25 | 5 | 1 | 6 | 4 | 8 | 7 | 8 | 8 |
| 26 | 9 | 8 | 9 | 8 | 1 | 5 | 1 | 6 |
| 27 | 4 | 1 | 6 | 1 | 6 | 8 | 6 | 6 |
| | | | | | | | | |
| n=27 | 15 9 | 136 | 165 | 151 | 174 | 203 | 169 | 192 |
| AVG | **5.9** | **5.0** | **6.1** | **5.6** | **6.4** | **7.5** | **6.3** | **7.1** |

### Example 5

### Evaluation of Stability of Retortable Dairy Bases

The stability of the dairy bases before and after retort processing was evaluated using a destabilizing force. Exemplary formulations of the dairy base of the disclosure are shown in Table 7. The concentration units disclosed in Table 7 are percent (%) by weight of the total dairy base unless specified otherwise.

**Table 7**

| **Dairy Base Formula** | **#1** | **#2** | **#3** | **#4** |
|---|---|---|---|---|
| **Ingredients** | | | | |
| | | | | |
| Water | 77.69 | 77.69 | 77.69 | 77.69 |
| Vegetable Oil¹ | 15.00 | 15.00 | 15.00 | 10.00 |
| Milk Protein Concentrate² | 6.50 | 6.50 | 6.50 | 6.50 |
| Gums | 0.81^{a} | 0.81^{b} | 0.81^{c} | 0.81^{d} |
| **Total Percent** | **100.0** | **100.0** | **100.0** | **100.0** |

| | | | | |
|---|---|---|---|---|
| ¹Vegetable oil is canola oil ²Milk protein concentrate is NUTRILAC™ 561 (Arla Food Ingredients, Denmark) ^{a}Gums = 100% guar/xanthan gum blend ^{b}Gums = 10% carrageenan and 90% guar/xanthan gum blend ^{c}Gums = 20% carrageenan and 80% guar/xanthan gum blend ^{d}Gums = 30% carrageenan and 70% guar/xanthan gum blend | | | | |

For formulations 1-4, milk protein concentrate was added to water at 140°F to form a protein-water mixture and blended under low shear conditions until smooth. In a separate step, the vegetable oil was added to the stabilizer (carrageenan, xanthan and/or guar gum) to form an oil-stabilizer system. Next, the protein-water mixture was heated to 180°F. After reaching 180°F, the oil-stabilizer system was added to the protein-water mixture and stirred under low shear conditions to form a homogenous dairy base. The dairy base was subsequently homogenized at a temperature of at least about 165°F in a two-stage homogenizer. The first stage was operated at 1700 psi while the second stage was operated at 500 psi. After homogenization, all dairy base samples were placed in to 230 cc polypropylene thermoformed trays and filled with 160 grams of base. Head spaces of about 70 to 75 cc were allowed for adequate mixing. Retort processing was accomplished using following conditions: Come up time, 13.5 minutes; Hold time, 7.5 minutes; Cooling time, 30 minutes; RPM, 6; Retort temperature, 250°F, Gauge pressure, 30 psi; Processing, water immersion.

All dairy bases and sauces prepared with the dairy bases of formulas 1-4 were subjected to a centrifugal "hard stress" test under the following conditions: G-980, centrifuging time = 5 min., waterbath temperature = 212°F, heating time = 10 min. Retorted and non- retorted samples of the dairy bases (formulations 1-4) were stable after being subjected to the hard stress test and exhibited no syneresis before or after retort. No phase separation was observed in the retorted or non-retorted dairy base samples after application of the hard stress test.

### Example 6

### Acid Stability of Retortable Dairy Base

In traditional chef-prepared dairy bases, proteins generally begin to precipitate at about pH 4.6. Traditional chef-prepared diary bases are therefore not considered suitable for use in acidic conditions. The rheology of the retortable diary base was evaluated at neutral and acidic pH values to determine acid stability. Dairy base #12 (Table 1 of Example 1) was evaluated at pH 6.5, 5.3, 4.3, and 3.5. The pH of the dairy base was adjusted with lactic acid. No curdling of the diary base or phase separation was observed at any of the tested pHs.

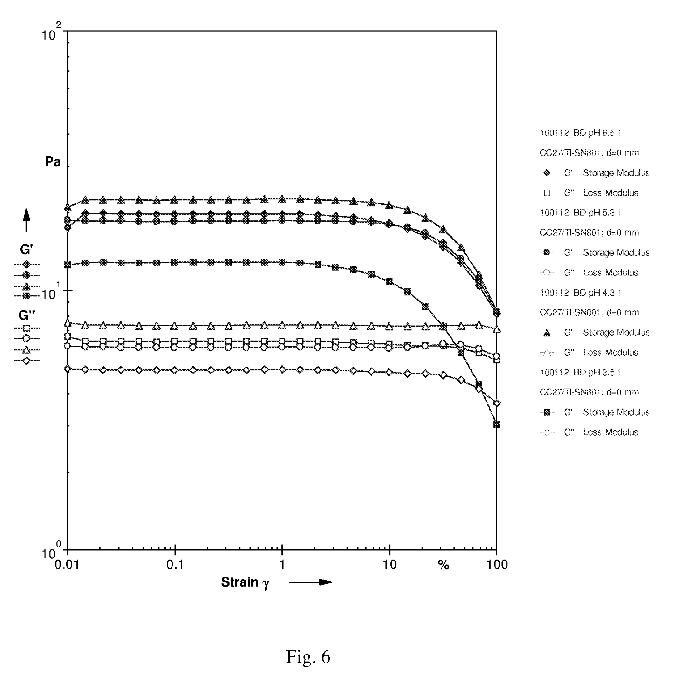

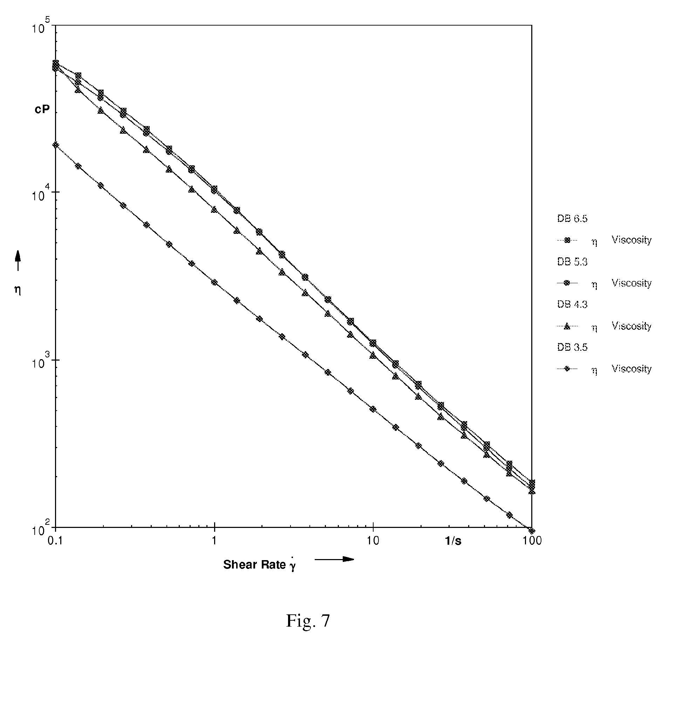

The storage modulus (G'), loss modulus (G"), and viscosity of the dairy base at pH 6.5, 5.3, 4.3, and 3.5 was determined using a controlled strain rheometer (Physcia MCR 301; Anton Paar USA Inc., Ashland, VA) under the following conditions:
Amplitude sweep (Fig. 6): 20°C, strain from 0.01% to 100%
Viscosity (Fig. 7): 20°C from 0.1 to 100 reciprocal seconds.

Figure 6 shows the storage modulus (G') and loss modulus (G") of the dairy base at the tested pHs as a function of increasing strain (from 0.01 to 100% strain). Table 8 shows the storage modulus (G') and loss modulus (G") of the diary base at 1% strain and 10% strain.

**Table 8**

| Strain | pH 6.5 | | pH 5.3 | | pH 4.3 | | pH 3.5 | |
|---|---|---|---|---|---|---|---|---|
| | G' | G" | G' | G" | G' | G" | G' | G" |
| 1% | 19.8 | 6.38 | 18.9 | 6.05 | 22.5 | 7.37 | 12.8 | 4.95 |
| 10% | 18.1 | 6.19 | 18.0 | 6.00 | 21.3 | 7.29 | 10.8 | 4.83 |

As shown by Figure 6 and Table 8, the structure of the dairy base at pH 6.5, 5.3, 4.3, and 3.5 was substantially identical. No change in structural integrity of the dairy base at neutral and acidic pHs was observed to about 10% strain. Figure 7 shows the viscosity of the dairy base at pH 6.5, 5.3, 4.3, and 3.5 as a function of increasing shear rate. As shown in Figure 7, the dairy base was shear thinning at pH 6.5, 5.3, 4.3, and 3.5 and the rate of thinning of the dairy base at the tested pHs was found to be substantially identical. The amplitude sweep data (Figure 6 and Table 8) and viscosity data (Figure 7) demonstrate that the dairy base is structurally stable to a pH of at least 3.5.

Dairy base adjusted to a pH of 3.5 with lactic acid was also subjected to hot fill and hold processing to achieve acceptable commercial sterility. No syneresis was observed after the hot fill and hold processing (data not shown), indicating that the emulsion of the dairy base is stable at acidic pHs as low as pH 3.5, even after thermal processing.

### Example 7

### Evaluation of Shelf Life Stability of Food Product Comprising Retortable Dairy Base

The shelf life stability of retorted food products containing a sauce comprising the retortable dairy base was evaluated. Shelf life stability of HEALTHY CHOICE® Tuscan Style Chicken (tomato cream sauce), MARIE CALLENDER'S® Garlic Herb Chicken (garlic cream sauce), MARIE CALLENDER'S® Classic Stroganoff (stroganoff cream sauce), MARIE CALLENDER'S® Creamy Parmesan Chicken (Alfred cream sauce) was evaluated under the following storage conditions: 70°F/50% relative humidity (RH); 90°F/85% RH; or 90°F/85% RH abused (90°F abused). The 90°F storage conditions are considered accelerated storage conditions in that 1 week of storage at the 90°F conditions is equivalent to about 1 month storage at 70-75°F. Samples that were abused were frozen for 24 hrs at 20°F, thawed for 24 hrs at 20°F, refrozen for 24 hrs at 20°F, and then thawed for 24 hrs at 70°F prior to time 0.

The shelf life stability of the retorted food products was evaluated at 180 days (6 months) of storage under the storage conditions described above. At least 40 samples of each of the food products were tested. Stability of the food products was determined by the amount of phase separation. Foods products having less than or equal to 1% phase separation by volume were considered shelf stable. After 180 days (6 months) of storage, all of the food products stored at the 70°F and 90°F conditions exhibited 0% phase separation. Storage at the 90°F conditions (abused and non-abused) for 180 days was considered equivalent to storage at 70°F-75°F for about 18 months. Of the food products subjected to the 90°F abused conditions, only one food product, the creamy parmesan chicken, exhibited some phase separation after 180 days but the amount of phase separation was less than 1% by volume.
The shelf life stability of the food products stored at the 70°F storage condition was also evaluated at 270 days (9 months). None of the food products stored for 270 days at the 70°F condition exhibited any phase separation (0% by volume).

It should be noted that, as used in this specification and the appended claims, the singular forms "a," "an," and "the" include plural referents unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

All publications and patent applications in this specification are indicative of the level of ordinary skill in the art. All publications and patent applications are herein incorporated by reference to the same extent as if each individual publication or patent application was specifically and individually indicated by reference.

The disclosure has been described with reference to various specific and preferred embodiments and techniques. However, it should be understood that many variations and modifications may be made while remaining within the spirit and scope.

The present application is also directed to the following clauses, which define aspects of the disclosed inventions:
1. A dairy base, comprising:
   about 0.25% to about 15% by weight of a heat-stable dairy protein component;
   about 0.1% to about 5% by weight of a stabilizer component;
   about 5% to about 30% by weight of an oil component; and
   about 50% to about 80% by weight water,
   wherein the dairy base comprises a stable emulsion at ambient temperature for at least 14 days after thermal processing such that a phase separation volume from the dairy base after thermal processing is less than 3% by volume of the dairy base.
2. The dairy base of clause 1, wherein the dairy base comprises a stable emulsion at ambient temperature for at least 14 days after thermal processing such that a phase separation volume from the dairy base after thermal processing is less than 1% by volume of the dairy base.
3. The dairy base of clause 1 or clause 2, wherein the heat-stable dairy protein component comprises milk protein concentrate, milk protein isolate, whey protein concentrate, whey protein isolate, or a mixture thereof.
4. The dairy base of clause 3, where the milk protein concentrate comprises about 65 to about 69% protein, about 11% to about 15% fat, about 5.5% or less moisture, and about 4% or less minerals.
5. The dairy base of clause 3, wherein the whey protein concentrate comprises about 69% to about 75% protein, about 18% to about 24% fat, and about 5.5% or less moisture.
6. The dairy base of any one of clauses 1 to 5, wherein the stabilizer component comprises xanthan gum, locust bean gum, guar gum, konjac, iota carrageenan, kappa carrageenan, lambda carrageenan, carboxymethylcellulose, pectin, tamarind, gellan gum, agar, gelatin, alginate, or a mixture thereof.
7. The dairy base of any one of clauses 1 to 5, wherein the stabilizer component is selected from the group consisting of locust bean gum, guar gum, xanthan gum, carrageenan gum, konjac, or any combination thereof.
8. The dairy base of any one of clauses 1 to 7, wherein the oil component comprises animal fat, vegetable fat, soy bean oil, sunflower oil, canola oil, modified canola oil, palm kernel oil, coconut oil, dairy fat, dairy crème, butter, or a mixture thereof.
9. The dairy base of clause 1, wherein the heat-stable dairy protein component comprises about 3% to about 8% by weight of the dairy base.
10. The dairy base of clause 1, wherein the stabilizer component comprises about 0.2% to about 1.5% by weight of the dairy base.
11. The dairy base of clauses 1 to 10, wherein the dairy base further comprises about 1% or less emulsifying salt by weight.
12. The dairy base of clause 11, wherein the emulsifying salt comprises monosodium phosphate, disodium phosphate, disodium pyrophosphate, trisodium pyrophosphate, tetrasodium pyrophosphate, pentasodium tripolyphosphate, monosodium citrate, disodium citrate, potassium citrate, or a mixture thereof.
13. The dairy base of any one of clauses 1 to 12, further comprising one or more colorants, flavors, or spices.
14. The dairy base of any one of clauses 1 to 13, wherein the thermal processing is retort processing, ultra-high temperature processing, or aseptic processing.
15. The dairy base of any one of clauses 1 to 14, wherein the thermal processing comprises heating the dairy base to at least 212 °F under an amount of pressure that prevents boiling of the dairy base.
16. The dairy base of any one of clauses 1 to 15, wherein the thermal processing comprises heating the dairy base to about 212 °F to about 300 °F under an amount of pressure that prevents boiling of the dairy base.
17. The dairy base of any one of clauses 1 to 16, wherein the dairy base comprises a viscosity of about 50,000 cP or less at a temperature of about 212 of to about 300 °F under an amount of pressure that prevents boiling of the dairy base.
18. The dairy base of any one of clauses 1 to 14, wherein the dairy base comprises a viscosity at a temperature of about 212 °F to about 300 °F under an amount of pressure that prevents boiling of the dairy base that is 5 fold or more less than the viscosity of the dairy base at a temperature of about 75 °F at atmospheric pressure.
19. The dairy base of any one of clauses 1 to 18, wherein the dairy base is thermoplastic.
20. The dairy base of any one of clauses 1 to 19, wherein the dairy base is commercially sterile.
21. The dairy base of any one of clauses 1 to 20, wherein the dairy base is a liquid, gel, semi-solid, or solid at room temperature or refrigeration temperatures.
22. The dairy base of clause 21, wherein the dairy base is in a dried or powder form.
23. The dairy base of any one of clauses 1 to 22, wherein the dairy base comprises a stabile emulsion after retort for at least 90 days.
24. The dairy base of any of clauses 1 to 23, wherein change in viscosity of the dairy base after retorting compared to viscosity of the dairy base before retorting is less than about 1%.
25. The dairy base of any one of clauses 1 to 24, wherein change in phase separation volume of the dairy base after retorting compared to phase separation volume of the dairy base before retorting is less than about 5%.
26. The dairy base of clause 15, wherein the dairy base is held at a temperature of about 212 °F to about 300 °F for a period of time sufficient to provide a commercially sterile dairy base.
27. The dairy base of any one of clauses 1 to 26, further comprising about 50 % or less cheese or cheese base by weight.
28. The dairy base of clause 27, wherein the cheese is powdered cheese.
29. The dairy base of any one of clauses 1 to 28, wherein the diary base is acid stable to a pH of at least 3.5.
30. A dairy base, comprising an oil-in-water emulsion, the oil-in-water emulsion comprising a water phase and a stabilized oil phase, the water phase comprising a heat-stable dairy protein component, and the stabilized oil phase comprising a stabilizer component and an oil component; wherein:
   (a) the heat-stable dairy protein component comprises about 0.25 % to about 15% of the dairy base by weight, the stabilizer comprises about 0.1 % to about 5% of the dairy base by weight, and the oil component comprising about 5% to about 30% of the dairy base by weight; and
   (b) the emulsion is stable at ambient temperature for at least 14 days after thermal processing such that a phase separation volume from the dairy base after thermal processing is less than 3% by volume of the oil-in-water emulsion.
31. A dairy base concentrate, comprising up to 50% by weight of the dairy base of any one of clauses 1 to 30 and up to 80% by weight of fat.
32. A food product comprising the dairy base of any of clauses 1 to 30.
33. A food product comprising the dairy base of clause 30.
34. A food product comprising the dairy base concentrate of clause 31.
35. The food product of clause 32, wherein the food product is a sauce.
36. The food product of clause 32 wherein the dairy base comprises up to 99% by weight of the food product.
37. The food product of clause 32, wherein the food product comprises a stable emulsion at ambient temperature for at least 14 days after thermal processing such that a phase separation volume from the food product after thermal processing is less than about 3% by volume of the food product.
38. The food product of clause 32, wherein the food product comprises a stable emulsion at ambient temperature for at least 14 days after thermal processing such that a phase separation volume from the food product after thermal processing is less than about 1% by volume of the food product.
39. The food product of clause 37 or clause 38, wherein the thermal processing is retort processing.
40. The food product of any one of clauses 37 to 39, wherein the thermal processing comprises heating the food product to at least 212 °F under an amount of pressure that prevents boiling of the food product.
41. The food product of any one of clauses 37 to 40, wherein the thermal processing comprises heating the food product a temperature of about 212 °F to about 300 °F under an amount of pressure that prevents boiling of the food product.
42. The food product of any of clauses 37 to 41, wherein the food product comprises a viscosity of about 50,000 cP or less at a temperature of about 212 °F to about 300 °F under an amount of pressure that prevents boiling of the food product.
43. The food product of any one of clauses 37 to 42, wherein the food product comprises a viscosity at a temperature of about 212 °F to about 300 °F under an amount of pressure that prevents boiling of the food product that is 5 fold or more less than the viscosity of the food product at a temperature of about 75 °F at atmospheric pressure.
44. The food product of clause 32, wherein the food product is held at a temperature of about 212 °F to about 300 °F at an amount of pressure that prevents boiling of the food product for a period of time sufficient to provide a commercially sterile food product.
45. The food product of any one of clauses 37 to 44, wherein the food product is commercially sterile.
46. A method of making the dairy base of any one of clauses 1 to 30, comprising homogenously blending the heat-stable dairy protein component; stabilizer component; oil component; and water to form the dairy base.
47. The method of clause 46, further comprising thermal processing the dairy base to form a shelf stable dairy base.
48. The method of clause 46 or clause 47, wherein the thermal processing is retort processing.

## Claims

1. A dairy base, comprising:
about 0.25% to about 15% by weight of a heat-stable dairy protein component;
about 0.1% to about 5% by weight of a stabilizer component;
about 5% to about 30% by weight of an oil component; and
about 50% to about 80% by weight water,
wherein the dairy base comprises a stable emulsion at ambient temperature for at least 14 days after thermal processing such that a phase separation volume from the dairy base after thermal processing is less than 3% by volume of the dairy base.

2. A dairy base, comprising an oil-in-water emulsion, the oil-in-water emulsion comprising a water phase and a stabilized oil phase, the water phase comprising a heat-stable dairy protein component, and the stabilized oil phase comprising a stabilizer component and an oil component; wherein:
(a) the heat-stable dairy protein component comprises about 0.25 % to about 15% of the dairy base by weight, the stabilizer comprises about 0.1 % to about 5% of the dairy base by weight, and the oil component comprising about 5% to about 30% of the dairy base by weight; and
(b) the emulsion is stable at ambient temperature for at least 14 days after thermal processing such that a phase separation volume from the dairy base after thermal processing is less than 3% by volume of the oil-in-water emulsion.

3. The dairy base of claim 1 or claim 2, wherein the dairy base comprises one or more of the following:
a) a heat-stable dairy protein component comprising milk protein concentrate, milk protein isolate, whey protein concentrate, whey protein isolate, or a mixture thereof;
b) an oil component comprising animal fat, vegetable fat, soy bean oil, sunflower oil, canola oil, modified canola oil, palm kernel oil, coconut oil, dairy fat, dairy crème, butter, or a mixture thereof;
c) a stabilizer component comprising xanthan gum, locust bean gum, guar gum, konjac, iota carrageenan, kappa carrageenan, lambda carrageenan, carboxymethylcellulose, pectin, tamarind, gellan gum, agar, gelatin, alginate, or a mixture thereof;
d) a stabilizer component selected from the group consisting of locust bean gum, guar gum, xanthan gum, carrageenan gum, konjac, or any combination thereof
e) an emulsifying salt comprising monosodium phosphate, disodium phosphate, disodium pyrophosphate, trisodium pyrophosphate, tetrasodium pyrophosphate, pentasodium tripolyphosphate, monosodium citrate, disodium citrate, potassium citrate, or a mixture thereof;
f) one or more colorants, flavors, or spices;
g) a milk protein concentrate comprising about 65 to about 69% protein, about 11% to about 15% fat, about 5.5% or less moisture, and about 4% or less minerals; or
h) a whey protein concentrate comprising about 69% to about 75% protein, about 18% to about 24% fat, and about 5.5% or less moisture.

4. The dairy base of any one of claims 1 to 3, wherein the dairy base comprises one or more of the following:
a) about 3% to about 8% heat-stable dairy protein component by weight of the dairy base;
b) about 0.2% to about 1.5% stabilizer component by weight of the dairy base;
c) about 1% or less emulsifying salt by weight; or
d) about 50 % or less cheese or cheese base by weight.

5. The dairy base of any one of claims 1 to 4, wherein the thermal processing comprises:
a) heating the dairy base to at least 212 °F under an amount of pressure that prevents boiling of the dairy base; or
b) heating the dairy base to about 212 °F to about 300 °F under an amount of pressure that prevents boiling of the dairy base.

6. The dairy base of any one of claims 1 to 5, wherein the dairy base is one or more of the following:
a) thermoplastic;
b) commercially sterile;
c) a liquid, gel, semi-solid, or solid at room temperature or refrigeration temperatures;
d) in a dried or powder form; or
e) acid stable to a pH of at least 3.5.

7. The dairy base of any one of claims 1 to 6, wherein the dairy base comprises one or more of the following characteristics:
a) a stabile emulsion after retort for at least 90 days;
b) a phase separation volume from the dairy base after thermal processing that is less than 1% by volume of the dairy base;
c) viscosity at a temperature of about 212 °F to about 300 °F under an amount of pressure that prevents boiling of the dairy base that is 5 fold or more less than the viscosity of the dairy base at a temperature of about 75 °F at atmospheric pressure;
d) a change in viscosity of the dairy base after retorting compared to viscosity of the dairy base before retorting that is less than about 1%; or
e) a change in phase separation volume of the dairy base after retorting compared to phase separation of the dairy base before retorting that is less than about 5%.

8. A dairy base concentrate, comprising up to 50% by weight of the dairy base of any one of claims 1 to 7 and up to 80% by weight of fat.

9. A food product comprising the dairy base of any one claims 1 to 7 or the dairy base concentrate of claim 8, wherein the dairy base comprises up to 99% by weight of the food product.

10. The food product of claim 9, wherein the food product comprises one or more of the following characteristics:
a) a stable emulsion at ambient temperature for at least 14 days after thermal processing such that a phase separation volume from the food product after thermal processing is less than about 3% by volume of the food product;
b) a stable emulsion at ambient temperature for at least 14 days after thermal processing such that a phase separation volume from the food product after thermal processing is less than about 1% by volume of the food product;
c) a viscosity of about 50,000 cP or less at a temperature of about 212 °F to about 300 °F under an amount of pressure that prevents boiling of the food product; or
d) a viscosity at a temperature of about 212 °F to about 300 °F under an amount of pressure that prevents boiling of the food product that is 5 fold or more less than the viscosity of the food product at a temperature of about 75 °F at atmospheric pressure.

11. The food product of claim 10, wherein the thermal processing comprises heating the food product to at least 212 °F under an amount of pressure that prevents boiling of the food product.

12. The food product of any one of claims 9 to 11, wherein the food product is one or more of the following:
a) commercially sterile; or
b) a sauce.

13. A method of making the dairy base of any one of claims 1 to 8, comprising:
homogenously blending the heat-stable dairy protein component; stabilizer component; oil component; and water to form the dairy base; and
thermal processing the dairy base to form a shelf stable dairy base.

14. The method of claim 13, wherein the dairy base is held at a temperature of about 212 °F to about 300 °F at an amount of pressure that prevents boiling of the dairy base for a period of time sufficient to provide a commercially sterile dairy base.

15. The dairy base of any one of claims 1 to 8, food product of claim 10 or 11, or method of claim 13 or 14, wherein the thermal processing is retort processing, ultra-high temperature processing, or aseptic processing.
